# EUROPEAN PATENT SPECIFICATION

(11) **EP 1 630 724 B1**
(45) Date of publication and mention of the grant of the patent: **23.09.2009**
(21) Application number: 04745434.3
(22) Date of filing: 24.05.2004
(51) Int. Cl.: G06K 13/08, G06K 7/00

(54) **CARD PROCESSING DEVICE**
KARTENVERARBEITUNGSEINRICHTUNG
DISPOSITIF DE TRAITEMENT DE CARTES

(30) Priority: 23.05.2003 JP 2003146143; 22.07.2003 JP 2003199719; 19.12.2003 JP 2003423390; 29.03.2004 JP 2004094704
(43) Date of publication of application: 01.03.2006
(73) Proprietor: OMRON CORPORATION, Kyoto-shi, Kyoto 600-8530 (JP)
(72) Inventor: TADAMASA, A., Omron Corp., 801, Minamifudodo-cho, Kyoto-shi, Kyoto 600-8530 (JP)
(74) Representative: Strehl Schübel-Hopf & Partner
(86) International application number: PCT/JP2004/007428
(87) International publication number: WO 2004/104909

(56) References cited:
- CA-A1- 2 273 678
- GB-A- 2 341 471
- JP-A- 63 054 688
- JP-A- 2001 222 686

## Description

### TECHNICAL FIELD

The present invention relates to a card processing device for performing an information reading or writing from or into an IC card.

### BACKGROUND ART

In a card processing device in the conventional technologies, when a card is inserted from the insertion port, the card processing device rotates rollers, thereby transporting the card into the inside of the device. Moreover, the card processing device reads information recorded in the card, using a reading head. Otherwise, the device writes information into the card, using a writing head. After that, the card processing device rotates the rollers in the backward direction, thereby ejecting the card out of the insertion port.

In a card processing device installed on a higher-order device such as a cash automatic-transaction processing device, there are some cases where a person who is going to commit an illegal act applies some tampering to the card processing device. This tampering is applied with a deliberate intention of causing the card to be clogged inside the card processing device. If, under this condition, a user of the cash automatic-transaction processing device inserts his or her card into the insertion port of the card processing device, it turns out that the card is clogged inside the card processing device. When an abnormality like this has occurred, in order to have the abnormality eliminated, the user leaves the location where the cash automatic-transaction processing device is set up, stepping all the way to a place where the person in charge resides. Then, this behavior causes the following problem to occur: Namely, in the meantime the user is away, the person who is going to commit the illegal act, using a tool or the like, takes out the card clogged inside the card processing device. The criminal person, then, carries away the card, making the misuse of it afterwards.

In order to solve the problem as described above, in a card processing device disclosed in JP-A-2001-222686 (which, hereinafter, will be referred to as "patent document 1"), if the clogging of the card has been detected, a press-contact member formed of a rubber-like pad or a tip-pointed needle is brought into press-contact with the card surface. On account of this press-contact, in the case where the pad is used as the press-contact member, a strong friction force occurs between the pad and the card surface. This prevents displacement of the card, thereby making it impossible to take out the card out of the insertion port. Also, in the case where the needle is used as the press-contact member, the tip of the needle bites into the card surface. This prevents displacement of the card, thereby making it impossible to take out the card out of the insertion port.

In addition to the above-described configuration, the patent document 1 describes the following configuration as well: The press-contact member is located such that it is brought into press-contact with a place other than a magnetic stripe provided on the card surface. This configuration avoids damage of the magnetic stripe, thereby protecting magnetic data. Also, conversely, the patent document 1 describes the following configuration as well: The press-contact member is located such that it is brought into press-contact with the magnetic stripe provided on the card surface. This configuration damages the magnetic stripe, thereby crashing the magnetic data.

In addition to the card processing device as disclosed in the patent document 1, which is capable of processing the magnetic card having the magnetic stripe provided on the card surface, as another card processing device, there exists a card processing device which is capable of processing an IC card having an IC contact-point provided at a predetermined position on the card surface. Here, consider the case where the techniques disclosed in the patent document 1 are applied to this card processing device capable of processing the IC card. Then, if an abnormality has occurred after the IC card had been inserted from the insertion port, the press-contact member is brought into press-contact with a portion on the IC card where the IC contact-point is provided. In this case, however, there exists a danger that, if the IC card is pulled toward the insertion-port side, the press-contact member may slip without being hooked on the IC contact-point, and that the IC card pulled may be taken out of the insertion port. The reason for this phenomenon is as follows: The IC contact-point on the IC card is composed of a metal such as copper, nickel, or gold. Accordingly, the IC contact-point is more solid and more likely to slip as compared with a portion other than the IC contact-point, such as an emboss portion. As a result, even if the pad is used as the press-contact member and is brought into press-contact with the IC contact-point, no strong friction force will occur between the IC contact-point and the pad. Also as a result, even if the needle is used as the press-contact member and is brought into press-contact with the IC contact-point, the needle will not bite into the IC contact-point. Incidentally, the portion where the magnetic stripe is provided is softer and more difficult to slip as compared with the IC contact-point.

The present invention has been devised in order to solve the above-described problem. Accordingly, an object thereof is to provide a card processing device which makes it possible to block the IC card without fail from being taken out of the insertion port.

CA-A1-2 2736678 discloses a card reader with the features of the preamble of claim 1.

### DISCLOSURE OF INVENTION

The present invention is defined in claim 1. Advantageous features are set out in the dependent claims.

In the configuration set out in claim 1, the IC contact-point head may be a one for performing both or either of the information reading and the information writing from and into the IC card. When there occurs an abnormality which will make the card processing difficult, the card processing device presses the card surface of the IC card by the press mechanism. Here, the abnormality is such as the case where the IC card is clogged inside the card processing device, or the case where an impulse is given to the card processing device.

As described above, the position at which the press mechanism presses the IC card, and the position at which the IC contact-point head makes contact with the IC card are located such that the two positions will not lie side by side on a straight line which is parallel to the insertion direction of the IC card. At the time of pressing the IC card, this configuration allows a portion other than the IC contact-point on the IC card to be accurately pressed by the press mechanism. The portion other than the IC contact-point on the IC card is softer and more difficult to slip as compared with the IC contact-point. As a result, pressing this portion by the press mechanism allows a strong friction force to occur between the press mechanism and the IC card. This makes it possible to block the IC card without fail from being taken out of the insertion port.

Also, in the configuration set out in claim 2, the position at which the press mechanism presses the card surface of the IC card, and a position through which the IC contact-point on the IC card passes after the IC card had been inserted from the insertion port in an authorized posture or a wrong posture may also be located such that the two positions will not lie side by side on a straight line which is parallel to the insertion direction of the IC card.

Implementing the configuration as described above allows the portion other than the IC contact-point on the IC card to be accurately pressed by the press mechanism. Here, this pressing is made possible not only in the case where the IC card had been inserted from the insertion port in the authorized posture, but also in the case where the IC card had been inserted therefrom in the wrong posture. Here, the wrong posture is such that the front and rear ends of the IC card are reversed, or the right and back sides thereof are reversed. This makes it possible to block the IC card without fail from being taken out of the insertion port.

The adove configurations allow, the portion other than the IC contact-point on the IC card to be accurately pressed by the press mechanism. This allows the strong friction force to occur between the press mechanism and the IC card, thereby making it possible to block the IC card without fail from being taken out of the insertion port.

### BRIEF DESCRIPTION OF THE DRAWINGS

Fig. 1 is a diagram for illustrating schematic structure of the inside of a card processing device;
Fig. 2 is a block diagram for illustrating electrical structure of the card processing device;
Fig. 3 is a flowchart for illustrating outline of the card processing;
Fig. 4 is a flowchart for illustrating details of the card processing;
Fig. 5 is a flowchart for illustrating the details of the card processing;
Fig. 6 is a flowchart for illustrating the details of the card processing;
Fig. 7 is a flowchart for illustrating the details of the card processing;
Fig. 8 is a flowchart for illustrating the details of the card processing;
Fig. 9 is a diagram for illustrating position of the card in the card processing device;
Fig. 10 is a diagram for illustrating the position of the card in the card processing device;
Fig. 11 is a diagram for illustrating the position of the card in the card processing device;
Fig. 12 is a diagram for illustrating a press mechanism provided in the card processing device;
Fig. 13 is a diagram for illustrating the press mechanism provided in the card processing device;
Fig. 14 is an enlarged view for illustrating an eccentric cam, the card, and a base in a contact state;
Fig. 15 is a diagram for illustrating the press mechanism provided in the card processing device;
Fig. 16 is an enlarged view for illustrating the eccentric cam, the card, and the base in a fixed state;
Fig. 17 is a diagram for illustrating the press mechanism seen from an arrow direction in Fig. 13;
Fig. 18 is an enlarged view for illustrating a state where a rubber is attached on the outer circumference of the eccentric cam;
Fig. 19 is an enlarged view for illustrating a state where projections and depressions are provided on the outer circumference of the eccentric cam;
Fig. 20 is a diagram for illustrating a state where a rubber is attached on the side surface of the eccentric cam;
Fig. 21 is a diagram for illustrating a state where the rubber is attached on the side surface of the eccentric cam;
Fig. 22 is a diagram for illustrating a state where a blade is mounted on the eccentric cam;
Fig. 23 is a diagram for illustrating a state where the blade is removed from the eccentric cam;
Fig. 24 is a schematic plan view for illustrating the card processing device;
Fig. 25 is a diagram for illustrating the press mechanism onto which a fixing member is provided; and
Fig. 26 is a diagram for illustrating the press mechanism onto which the fixing member is provided.

### BEST MODE FOR CARRYING OUT THE INVENTION

Hereinafter, referring to the drawings, the explanation will be given below concerning embodiments for carrying out the card processing device of the present invention.

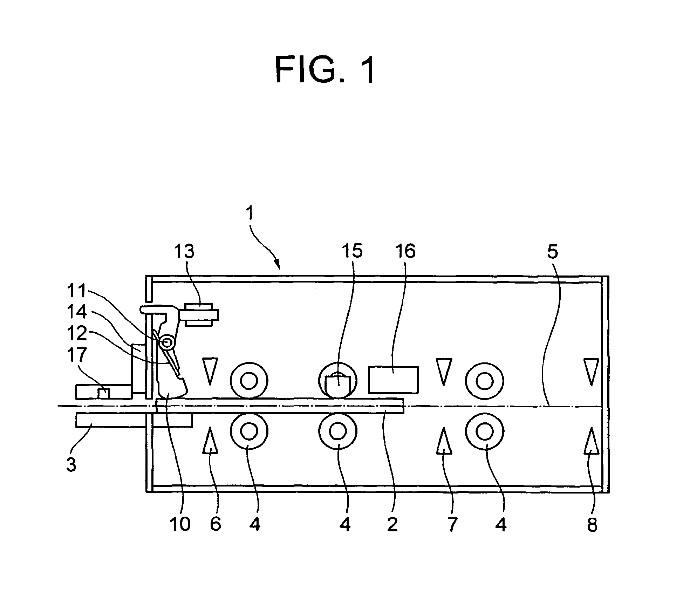

Fig. 1 is a diagram for illustrating schematic structure of the inside of a card processing device 1 to which the present invention is applied. The present card processing device 1 is capable of processing both a contact-type IC card and a magnetic card. An insertion detection sensor 17 detects that a card 2 has been inserted into an insertion port 3. The card 2 has recorded information therein. When the card 2 is the magnetic card, a magnetic stripe is provided at a predetermined position on the card surface, and the magnetic stripe has recorded magnetic information therein. When the card 2 is the contact-type IC card, an IC contact-point is provided at a predetermined position on the card surface, and an IC chip connected to the IC contact-point is provided inside the card 2. The IC chip has recorded information therein.

If the insertion detection sensor 17 detects the insertion of the card 2, a shutter 14 is opened. This makes it possible to transport the card 2 into the inside of the card processing device 1. A transportation path 5 along which the card 2 is to be transported is shown by an alternate long-and-short dashed line. The transportation path 5 includes the insertion port 3 and upper and lower rollers 4. A motor is driven, which rotates the rollers 4. If the card 2 inserted from the insertion port 3 makes contact with the rollers 4, the rollers 4 are rotated, which transports the card 2 into the inside of the card processing device 1. Card detection sensors 6, 7, and 8 detect the presence or absence of the card 2 at their respective positions. After the insertion of the card 2, if the card detection sensor 6 is transitioned from the state of having detected the card 2 to a state of having not detected the card 2, the shutter 14 is closed.

When the inserted card 2 is the magnetic card, a magnetic head 15, during the transportation of the magnetic card, reads the magnetic information recorded in the magnetic card, or writes magnetic information into the magnetic card. When the inserted card 2 is the IC card, the card 2 is transported up to a predetermined position. Moreover, a solenoid for lowering an IC contact-point head 16 is driven. As a result, the IC contact-point head 16 is lowered, thus making contact with the IC contact-point on the IC card. Furthermore, the IC contact-point head 16 reads the information from the IC card, or writes information into the IC card. When the reading or writing has been terminated, the solenoid for lowering the IC contact-point head 16 ceases to be driven. As a result, the IC contact-point head 16 is raised, thus leaving the IC contact-point on the IC card. When the information reading or writing from or into the card 2 has been terminated as is described above, the rollers 4 are rotated in the backward direction. This transports the card 2 toward the insertion port 3. In addition, if the card detection sensor 6 is transitioned from the state of having not detected the card 2 to a state of having detected the card 2, the shutter 14 is opened. This allows the rollers 4 to transport the card 2 to the outside of the insertion port 3.

As an example of the card abnormality which may occur in the above-described card processing device 1, assume the following case: Some tampering had been applied to the insertion port 3, and accordingly the card 2 has been clogged inside the transportation path 5 at the time of inserting or ejecting the card 2. When the rollers 4 are not being rotated despite the fact that the rollers 4 are caused to be rotated, the card processing device 1 detects that the card 2 has been clogged at the position of the card detection sensor 6. If the card processing device 1 has detected the clogging of the card 2, an eccentric-cam solenoid 13 is driven. Then, an elastic force by a torsion coil spring 12 rotates an eccentric cam 10 in a clockwise direction with a rotation axis 11 as the center. This rotation causes outer circumference of the eccentric cam 10 to make contact with the card 2, thereby pressing the surface of the card 2. Fig. 1 illustrates a state where the outer circumference of the eccentric cam 10 has made contact with the card 2. This contact allows a friction force to occur between the eccentric cam 10 and the card 2, thereby blocking the card 2 from being extracted out of the insertion port 3 to the outside. The explanation will be given later regarding the details of a press mechanism which includes such configuration components as the eccentric-cam solenoid 13, the eccentric cam 10, and the torsion coil spring 12.

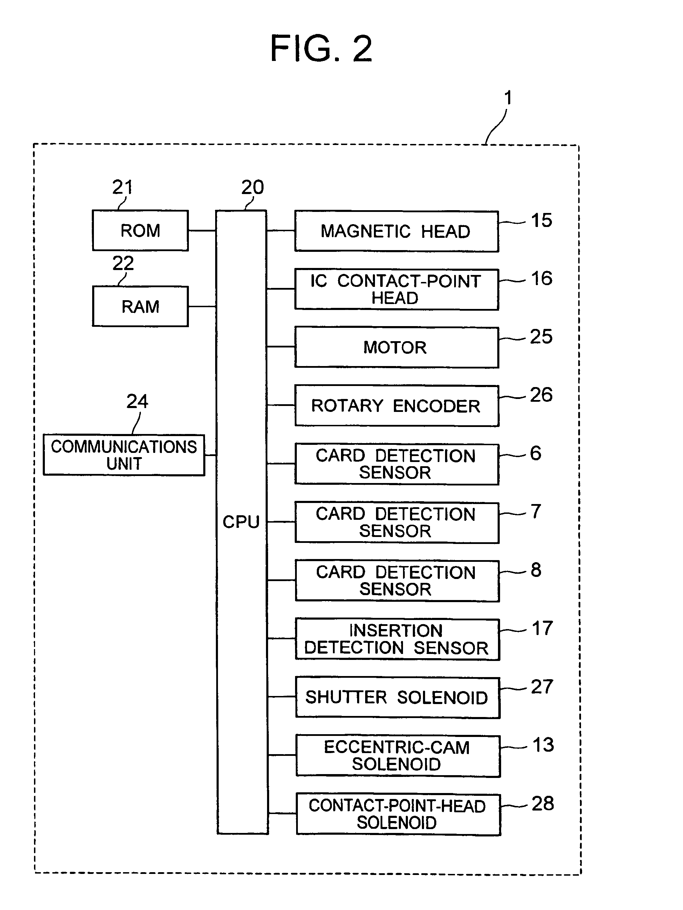

Fig. 2 is a block diagram for illustrating electrical structure of the card processing device 1. A CPU 20 controls the respective units of the card processing device 1 illustrated in Fig. 2, and acquires information from the respective units. When the card 2 inserted into the card processing device 1 is the magnetic card, the magnetic head 15 makes contact with the magnetic stripe on the magnetic card, then reading the magnetic information from the magnetic stripe, or writing the magnetic information into the magnetic stripe. When the card 2 inserted into the card processing device 1 is the IC card, the IC contact-point head 16 makes contact with the IC contact-point on the IC card, then, via the IC contact-point, reading the information from the IC chip of the IC card, or writing the information into the IC chip.

The motor 25 is driven, which rotates the rollers 4 which are mechanically connected thereto. If the card 2 exists between the upper and lower rollers 4, the card 2 is transported. A rotary encoder 26 detects rotation number of the motor 25. The card detection sensors 6, 7, and 8 detect whether or not the card 2 exists at the predetermined positions on the transportation path 5. An insertion detection sensor 17 detects whether or not the card 2 exists at the insertion port 3. Having detected the existence of the card 2, the sensors 6, 7, 8, and 17 are switched from the OFF states to the ON states. A shutter solenoid 27 opens or closed the shutter 14. The eccentric-cam solenoid 13 is driven for rotating the eccentric cam 10. The contact-point-head solenoid 28 displaces the IC contact-point head 16 in the up and down directions.

A ROM 21 has stored operation programs for the CPU 20. A RAM 22 temporarily stores control parameters for controlling the respective units, and information acquired from the respective units such as the magnetic head 15 and the IC contact-point head 16. Moreover, the RAM 22 temporarily stores the information which is to be written into the card 2 by the magnetic head 15 and the IC contact-point head 16. A communications unit 24 is connected to a higher-order device of the card processing device 1. An example of the higher-order device is a cash automatic-transaction processing device on which the card processing device 1 is installed. The communications unit 24 transmits, to the higher-order device, information such as the information read from the card 2 and failure information indicating that the card 2 has been clogged. Also, the communications unit 24 receives information such as the information to be written into the card 2 from the higher-order device and type information of the card 2 which is a processing target.

Next, the explanation will be given below concerning the processing which, after the card 2 had been inserted into the card processing device 1, ranges from the step that the card processing device 1 performs the information reading and writing to the step that the card processing device 1 ejects the card 2. Also, the explanation will be given below regarding the card take-out blockage processing in the case where the card 2 has been clogged at the time of the insertion or ejection.

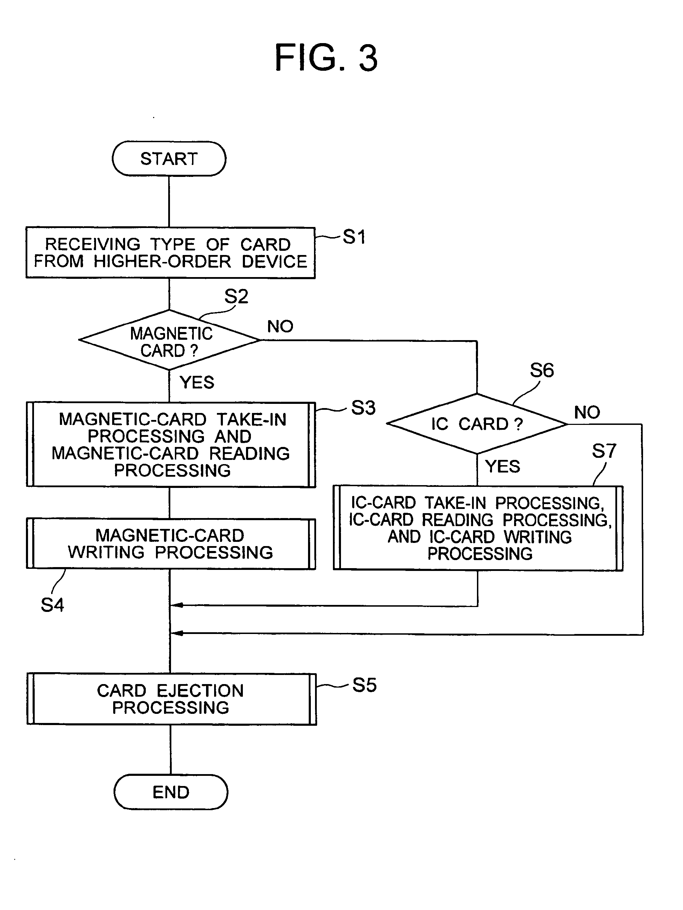

Fig. 3 is a flowchart for illustrating outline of the card processing in the card processing device 1. At a step S1, the CPU 20 receives type of the card 2 from the higher-order device via the communications unit 24. Here, as the type of the card 2, the magnetic card and the contact-type IC card are assumed. Next, at a step S2, the CPU 20 judges whether or not the type of the card 2 that it has received is the magnetic card. If the CPU 20 has judged that the type is the magnetic card, at a step S3, the CPU 20 performs a take-in processing of the magnetic card, and a reading processing of magnetic information from the magnetic card. Moreover, at a step S4, the CPU 20 performs a writing processing of magnetic information into the magnetic card. Furthermore, at a step S5, the CPU 20 performs an ejection processing of the card 2. The explanation will be given later regarding the details of the card processing at the steps S3, S4, and S5.

Meanwhile, if, at the step S2, the CPU 20 has judged that the type of the card 2 received is not the magnetic card, at a step S6, the CPU 20 judges whether or not the type of the card 2 received is the contact-type IC card. If the CPU 20 has judged that the type is the IC card, at a step S7, the CPU 20 performs a take-in processing of the IC card, a reading processing of information from the IC card, and a writing processing of information into the IC card. After that, at the step S5, the CPU 20 performs the ejection processing of the card 2. The explanation will be given later regarding the details of the card processing at the step S7.

Also, if, at the step S6, the CPU 20 has judged that the type of the card 2 received is not the IC card, the CPU 20 proceeds to the step S5 without performing each processing at the step S7, and performs the ejection processing of the card 2. This is because the CPU fins it impossible to perform the card processing since the type is neither of the magnetic card and the IC card assumed.

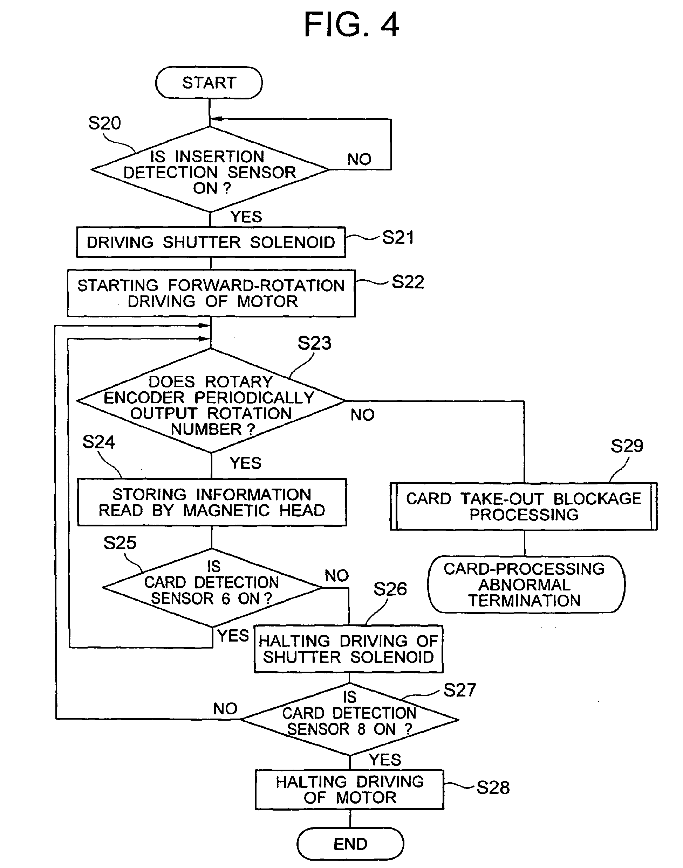

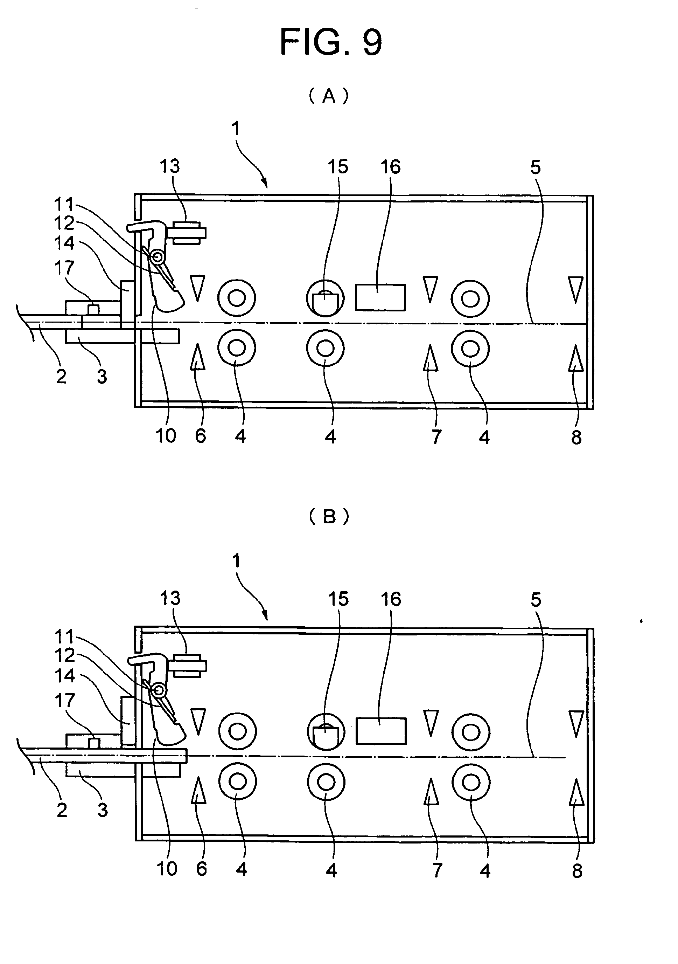

Fig. 4 is a flowchart for illustrating the details of the magnetic-card take-in processing and the magnetic-card reading processing at the step S3 in Fig. 3. At a step S20, the CPU 20 judges whether or not the insertion detection sensor 17 has detected the insertion of the card 2 into the insertion port 3. Fig. 9 (A) illustrates the state where the card 2 is inserted into the insertion port 3. In Fig. 9 (A), the left-side part of the card 2 is omitted in the illustration. Since the front end of the card 2 has not reached the insertion detection sensor 17, the shutter 14 is closed.

If the insertion detection sensor 17 has detected the insertion of the card 2, the CPU 20 proceeds to a step S21 next thereto. At the step S21, the CPU 20 drives the shutter solenoid 27, thereby allowing the shutter 14 to open up the transportation path 5. Fig. 9 (B) illustrates the state where the insertion detection sensor 17 has detected the existence of the card 2, and thereby the shutter 14 is opened to open up the transportation path 5. Also, Fig. 9 (B) illustrates the state where the card 2 has been inserted further into the inside of the card processing device 1. Moreover, at a step S22 in Fig. 4, the CPU 20 starts a forward-rotation driving of the motor 25. The motor 25 is forward-rotation driven, which causes the respective rollers 4 connected to the motor 25 to be rotated in a direction which will transport the card 2 into the inside of the card processing device 1. In Fig. 9, the rollers 4 will transport the card 2 in the right-side direction. The magnetic card used in the embodiment has recorded the magnetic information by the F2F scheme (: Two Frequency Coherent Phase Encoding). In the case of the F2F-scheme magnetic card, the magnetic card is transported at a constant speed, thereby allowing the magnetic head 15 to read the magnetic information recorded in the magnetic card. Accordingly the CPU 20 controls the motor 25 so that it will be rotated at a constant speed. Based on a feedback control using the rotation number of the motor 25 outputted by the rotary encoder 26, the CPU 20 maintains the rotation speed of the motor 25 at the constant value. At a step S28 in Fig. 4, which will be descried later, the CPU 20 controls the motor 25 so that it will be continuously forward-rotation driven at the constant speed until the CPU 20 has halted the driving of the motor 25.

At a step S23, the CPU 20 judges whether or not the rotary encoder 26 periodically outputs the rotation number of the motor 25. For example, the CPU 20 transmits a driving instruction to the motor 25, and judges whether or not the rotary encoder 26 detects the rotation of the motor 25 in response to this transmission. If the rotary encoder 26 periodically outputs the rotation number, it turns out that the magnetic card is being transported at the constant speed. Meanwhile, if the rotary encoder 26 does not periodically output the rotation number, or outputs none of the rotation number, it turns out that the magnetic card has been clogged. Namely, the step S23 judges whether or not the card 2 has been clogged. If the card 2 has not been clogged, the CPU 20 proceeds to a step S24. Meanwhile, if the card 2 has been clogged, the CPU 20 proceeds to a step S29. Moreover, at the step S24, the CPU 20, using the magnetic head 15, reads the magnetic information from the magnetic stripe of the magnetic card which is being transported at the constant speed. The CPU 20 stores the read magnetic information into the RAM 22. The processing at the step 24 will be continuously performed until the driving of the motor 25 has been halted.

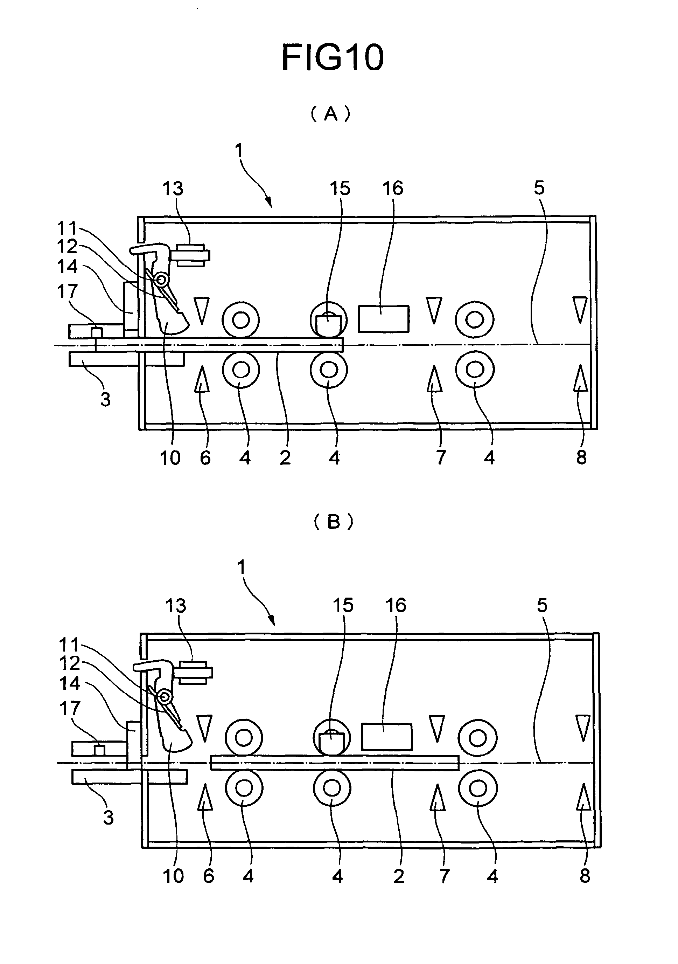

At a step S25, the CPU 20 judges whether or not the card detection sensor 6 has detected the existence of the card 2. If the card detection sensor 6 has detected the card 2, the CPU 20 returns to the processing at the step 23. As long as the card detection sensor 6 continues to detect the card 2, the CPU 20 continues to judge whether or not the card 2 has been clogged. Namely, by repeating the processings at the steps S23, S24, and S25, the CPU 20 judges whether or not the card 2 has been clogged at the position of the card detection sensor 6. Fig. 10 (A) illustrates the position of the card 2 at the time when the card detection sensor 6 has detected the card 2. Also, Fig. 10 (A) illustrates the state where the magnetic head 15 makes contact with the magnetic card, and reads the magnetic information from the magnetic stripe.

At the step S25 in Fig. 4, if the card detection sensor 6 ceases to detect the card 2, the state is a one where the card 2 had passed through the insertion port 3, and has been taken in the inside of the card processing device 1. In this case, the CPU 20 proceeds to a step S26, then halting the driving of the shutter solenoid 27. This closes the shutter 14. Fig. 10 (B) illustrates the position of the card 2 at the time when the card detection sensor 6 ceases to detect the card 2. Also, Fig. 10 (B) illustrates the state where the driving of the shutter solenoid 27 is halted, and the shutter 14 is closed. The processing at the step S26 in Fig. 4, where the driving of the shutter solenoid 27 is halted, is performed only one time in the entire processing in Fig. 4.

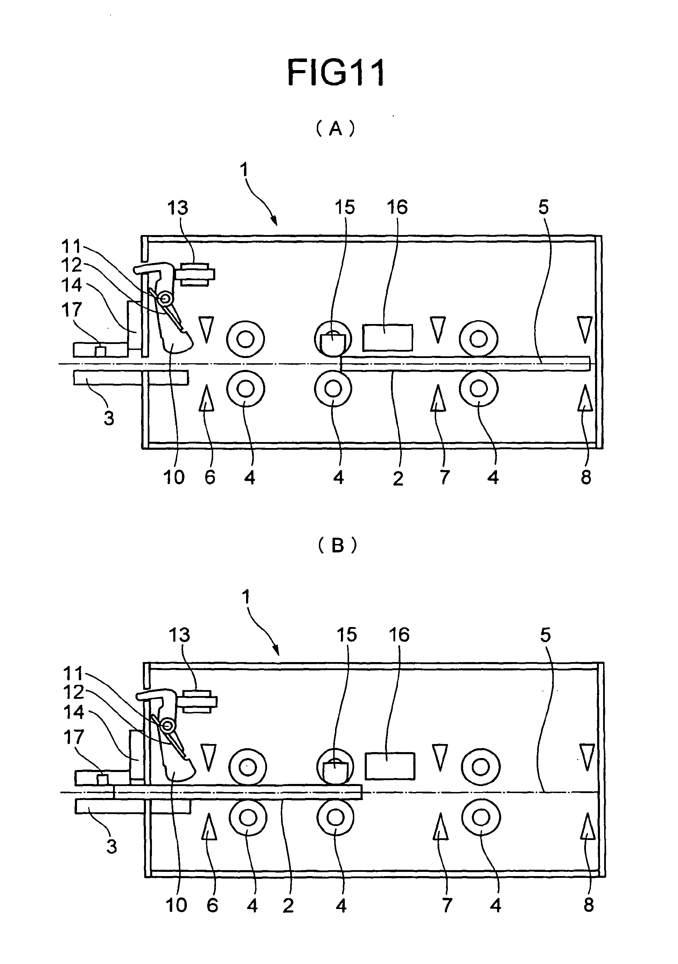

Having halted the driving of the shutter solenoid 27, the CPU 20, at a step S27, judges whether or not the card detection sensor 8 has detected the existence of the card 2. For the card 2 to exist at the position of the card detection sensor 8 means that the entire card 2 has passed through the magnetic head 15. Fig. 11 (A) illustrates the state where the front end of the card 2 has reached the position of the card detection sensor 8. Also, Fig. 11 (A) illustrates the state where the rear end of the card 2 has passed through the magnetic head 15. If the card detection sensor 8 has detected the existence of the card 2, at the step S28, the CPU 20 halts the driving of the motor 25. This halts the rotations of the respective rollers 4, thereby halting the transportation of the card 2. Furthermore, the CPU 20 transmits the magnetic information stored in the RAM 22 to the higher-order device via the communications unit 24. This terminates the reading processing of the magnetic information from the magnetic card.

Meanwhile, if, at the step S27, the card detection sensor 8 has not detected the existence of the card 2, the state is a one where the magnetic head 15 and the magnetic card still make contact with each other. In other words, the state is a one where the magnetic-information reading processing from the magnetic card has not been completed. In this case, the CPU 20 returns to the processing at the step S23, then continuing the transportation of the card 2 by the driving of the motor 25, and the magnetic-information reading processing from the magnetic card by the magnetic head 15.

Assume that a person who is going to commit an illegal act applies some tampering to the card processing device 1 so that the card 2 will be clogged in the transportation path 5. Fig. 11 (B) illustrates the position of the card 2 at the time when the card 2 has been clogged. In this case, despite the fact that the CPU 20 continues to drive the motor 25, the rotary encoder 26 detects no rotation of the motor 25. On account of this, the CPU 20, at the step S23 in Fig. 4, judges that the rotary encoder 26 does not periodically output the rotation number of the motor 25. Moreover, at the step S29, the CPU 20 performs the card take-out blockage processing. The explanation will be given later concerning the details of the card processing at the step S29. After that, the CPU 20 forcefully terminates (i.e., abnormal termination) the card processing illustrated in Fig. 3.

In the flowchart illustrated in Fig. 4, as was explained at the step S23, the card take-out blockage processing will be performed when the rotary encoder 26 does not periodically output the rotation number. Other than this configuration, the card take-out blockage processing may also be performed only when the rotary encoder 26 does not periodically output the rotation number, and when the card detection sensor 6 detects the existence of the card 2. Implementing the latter configuration makes it possible to perform the card take-out blockage processing only when the card 2 exists at the position of the card detection sensor 6.

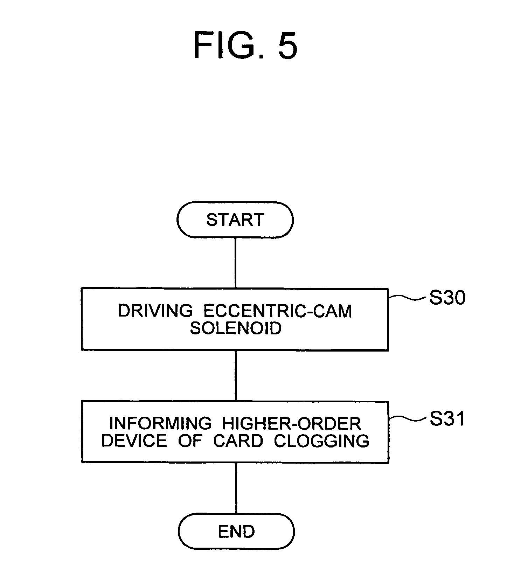

Fig. 5 is a flowchart for illustrating the details of the card take-out blockage processing at the step S29 in Fig. 4. At a step S30, the CPU 20 drives the eccentric-cam solenoid 13. Then, the eccentric cam 10 is rotated with the rotation axis 11 as the center. This rotation causes the outer circumference of the eccentric cam 10 to make contact with the card 2, thereby pressing the surface of the card 2. This blocks the card 2 from being taken out of the insertion port 3. The explanation will be given later regarding the details of the press mechanism. Furthermore, at a step S31, the CPU 20, via the communications unit 24, informs the higher-order device of failure information to the effect that the card 2 has been clogged in the transportation path 5.

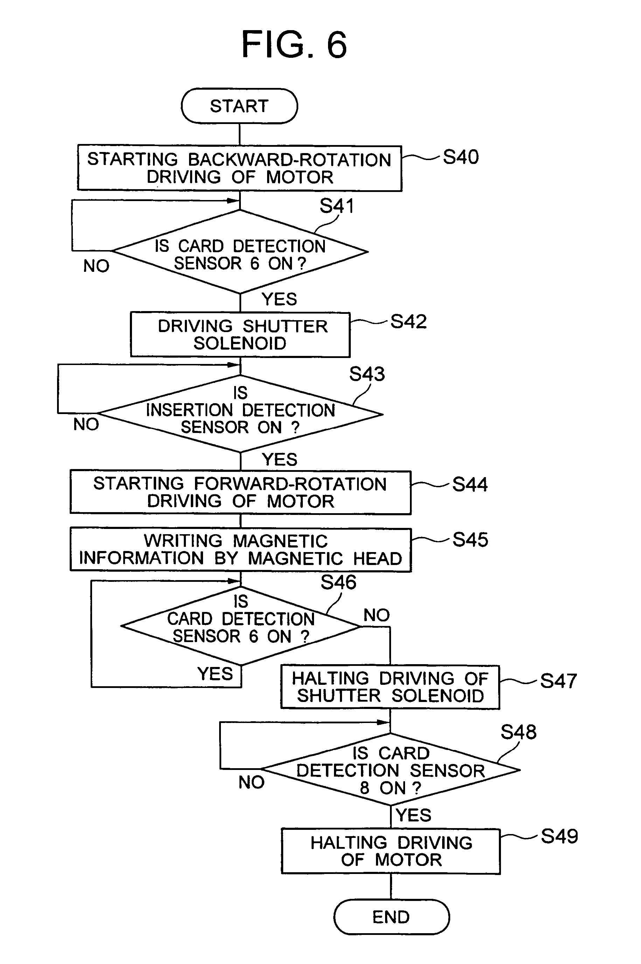

Fig. 6 is a flowchart for illustrating the details of the writing processing of magnetic information into the magnetic card at the step S4 in Fig. 3. At the point-in-time when the processing at the step S3 in Fig. 3 has been terminated, as illustrated in Fig. 11 (A), the magnetic card has halted at the right end of the transportation path 5. In order to bring back the magnetic card to the side of the insertion port 3 of the transportation path 5, at a step S40, the CPU 20 starts a backward-rotation driving of the motor 25. Then, the respective rollers 4 connected to the motor 25 are rotated such that they will transport the magnetic card toward the side of the insertion port 3. When the magnetic card has been transported toward the side of the insertion port 3, at a step S41, the card detection sensor 6 detects the existence of the magnetic card. On account of this, at a step S42, the CPU 20 drives the shutter solenoid 27. This opens the shutter 14. Consequently, the magnetic card can be transported up to the insertion port 3. This allows magnetic information to be written from the front end of the magnetic card in processings hereinafter. Fig. 10 (A) illustrates the position of the magnetic card at this time. Incidentally, the transportation path 5 of the card processing device 1 is lengthened. This makes it possible to transport the magnetic card without opening the shutter 14 to a position at which the magnetic information can be written from the front end of the magnetic card.

If, at a step S43 in Fig. 6, the insertion detection sensor 17 has detected the existence of the magnetic card, at a step S44, the CPU 20 starts a forward-rotation driving of the motor 25. Moreover, at a step S45, from the higher-order device via the communications unit 24, the CPU 20 receives information to be written into the magnetic card, then storing the information into the RAM 22. Subsequently, based on the information stored in the RAM 22, the CPU 20, using the magnetic head 15, writes the magnetic information into the magnetic card which is being transported. The writing of the magnetic information will be continuously performed during only a time-period in which the CPU 20 transmits a writing signal to the magnetic head 15. Then, at a step S46, if the card detection sensor 6 ceases to detect the magnetic card, the magnetic card does not exist at the position of the shutter 14. Consequently, at a step S47, the CPU 20 halts the driving of the shutter solenoid 27. This closes the shutter 14. Fig. 10 (B) illustrates the position of the magnetic card at this time. Furthermore, the magnetic card continues to be transported. Then, if, at a step S48, the card detection sensor 8 has detected the existence of the card 2, at a step S49, the CPU 20 halts the driving of the motor 25. This halts the rotations of the respective rollers 4, thereby halting the transportation of the magnetic card. Fig. 11 (A) illustrates the position of the magnetic card at this time. After that, the CPU 20 terminates the writing processing of the magnetic information into the magnetic card, then proceeding to the step S5 in Fig. 3 to perform the ejection processing of the IC card. Incidentally, concerning a point-in-time when the CPU 20 receives information to be written into the magnetic card from the higher-order device, any time is allowable as long as it is before the writing start by the magnetic head 15 at the step S45.

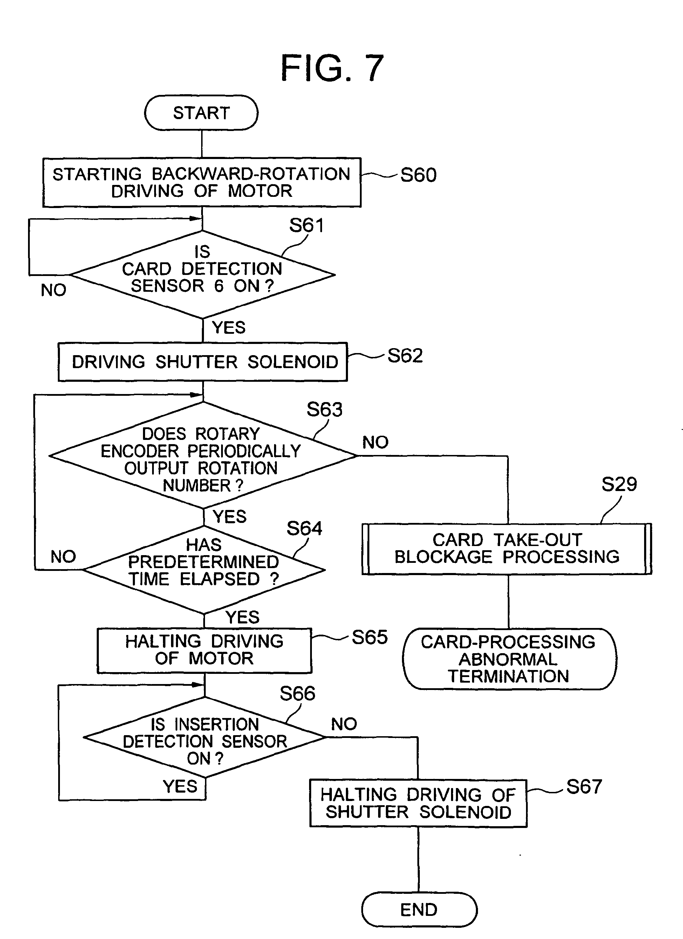

Fig. 7 is a flowchart for illustrating the details of the card ejection processing at the step S5 in Fig. 3. At the point-in-time when the processing at the step S4 in Fig. 3 has been terminated, as illustrated in Fig. 11 (A), the card 2 has halted at the right end of the transportation path 5. In order to bring back the card 2 to the side of the insertion port 3 of the transportation path 5, and to eject the card 2, at a step S60 in Fig. 7, the CPU 20 starts a backward-rotation driving of the motor 25. This causes the respective rollers 4 connected to the motor 25 to be rotated such that they will transport the card 2 toward the side of the insertion port 3. The driving of the motor 25 will be continuously performed until the driving of the motor 25 has been halted at a step S65 which will be described later.

When the card 2 has been transported toward the side of the insertion port 3, and, at a step S61, the card detection sensor 6 detects the existence of the card 2, the card 2 under transportation is approaching the insertion port 3. Accordingly, at a step S62, the CPU 20 drives the shutter solenoid 27. This opens the shutter 14, thereby making it possible to eject the card 2 on the transportation path 5 out of the insertion port 3.

At a step S63, the CPU 20 judges whether or not the rotary encoder 26 periodically outputs the rotation number of the motor 25. Similarly to the above-described step S23, this allows the CPU 20 to judge whether or not the card 2 has been clogged at the position of the card detection sensor 6.

If, at the step S63, the CPU 20 has judged that the rotary encoder 26 does not periodically output the rotation number, i.e., the card 2 has been clogged, the CPU 20 executes the card take-out blockage processing at the step S29 in accordance with the above-described flowchart in Fig. 5. After the execution, the CPU 20 performs the abnormal termination of the card processing.

Meanwhile, at the step S63 in Fig. 7, if the CPU 20 has judged that the rotary encoder 26 periodically outputs the rotation number, i.e., the card 2 has not been clogged in the transportation path 5, at a step S64, the CPU 20 judges whether or not a predetermined time has elapsed since the card detection sensor 6 detected the existence of the card 2. At this time, the card 2 is being transported so as to be ejected at a constant speed toward the insertion port 3 by the rotations of the rollers 4. As a result, a time has been beforehand determined which elapses from a point-in-time when the front end of the card 2 in the ejection direction had passed through the position of the card detection sensor 6 to a point-in-time when the rear end of the card 2 in the ejection direction has passed through the rollers 4 nearest to the insertion port 3. Accordingly, this time is set as the above-described predetermined time. Unless there has occurred an abnormality such as the clogging of the card 2 in the card processing device 1, if the predetermined time has elapsed, the card 2 has already passed through all the rollers 4. Consequently, at a step S65, the CPU 20 halts the driving of the motor 25. As a result, the rotations of the respective rollers 4 are halted. This halts the transportation of the card 2. If the predetermined time has not elapsed, the card 2 has not passed through all the rollers 4 yet. Consequently, the CPU 20 continues the transportation of the card 2 by the rollers 4.

In the above-described configuration, the driving of the motor 25 is halted by measuring the time. Other than this configuration, the driving of the motor 25 may also be halted when the card 2 has passed through a predetermined position under a condition that the card detection sensors on the transportation path had been increased in number.

If, at the step S65, the CPU 20 has halted the driving of the motor 25, at a step S66, the CPU 20 judges whether or not the insertion detection sensor 17 has detected the existence of the card 2. If, at the step S66, the CPU 20 has judged that the insertion detection sensor 17 has not detected the existence of the card 2, this indicates a state where the card 2 does not exist at the insertion port 3. Namely, this indicates the state where the user has already taken out the card 2 with no failure occurring. In this case, at a step S67, the CPU 20 halts the driving of the shutter solenoid 27. This closes the shutter 14, thereby terminating the card ejection processing.

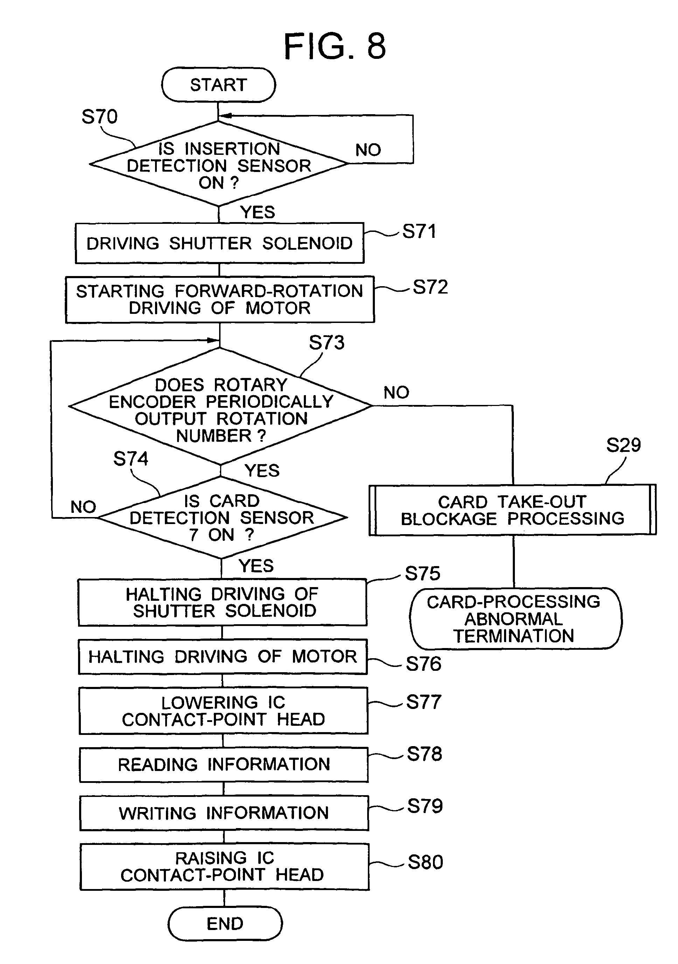

Fig. 8 is a flowchart for illustrating the details of the IC-card take-in processing, the IC-card reading processing, and the IC-card writing processing at the step S7 in Fig. 3. At the point-in-time when the processing at the step S2 in Fig. 3 has been terminated, as illustrated in Fig. 9(A), the state is a one where the front end of the card 2 has been inserted into the insertion port 3.

At a step S70 in Fig. 8, the CPU 20 judges whether or not the insertion detection sensor 17 has detected the insertion of the IC card. If the insertion detection sensor 17 has detected the insertion of the IC card, at a step S71, the CPU 20 drives the shutter solenoid 27. This opens the shutter 14, thereby making it possible to insert the IC card into the inside of the card processing device 1. Moreover, at a step S72, the CPU 20 starts a forward-rotation driving of the motor 25. This causes the respective rollers 4 connected to the motor 25 to be rotated such that they will transport the IC card into the inside of the card processing device 1 from the insertion port 3.

At a step S73, the CPU 20 judges whether or not the rotary encoder 26 periodically outputs the rotation number of the motor 25. Similarly to the above-described step S23, this allows the CPU 20 to judge whether or not the IC card has been clogged in the vicinity of the card detection sensor 6.

If, at the step S73, the CPU 20 has judged that the rotary encoder 26 does not periodically output the rotation number, i.e., the card 2 has been clogged, the CPU 20 executes the card take-out blockage processing at the step S29 in accordance with the above-described flowchart in Fig. 5. After the execution, the CPU 20 performs the abnormal termination of the card processing.

Meanwhile, at the step S73, if the CPU 20 has judged that the rotary encoder 26 periodically outputs the rotation number, i.e., the card 2 has not been clogged in the transportation path 5, at a step S74, the CPU 20 judges whether or not the card detection sensor 7 has detected the existence of the IC card. The card detection sensor 7 has been provided such that, when the front end of the IC card reaches the position of the card detection sensor 7 in the insertion direction, the IC contact-point on the IC card will have reached the position of the IC contact-point head 16.

If, at the step S74, the card detection sensor 7 has not detected the IC card, the CPU 20 returns back to the step S73, then judging whether or not the IC card has been clogged. Meanwhile, if the card detection sensor 7 has detected the IC card, at a step S75, the CPU 20 halts the driving of the shutter solenoid 27. This closes the shutter 14. Furthermore, at a step S76, the CPU 20 halts the driving of the motor 25. This halts the rotations of the respective rollers 4, thereby halting the transportation of the IC card. At this time, the IC contact-point on the IC card is positioned in a manner of being opposed to the IC contact-point head 16.

At a step S77, the CPU 20 drives the contact-point-head solenoid 28, thereby lowering the IC contact-point head 16. This allows the IC contact-point head 16 to make contact with the IC contact-point on the IC card. Moreover, at a step S78, the CPU 20 reads information from the IC chip of the IC card. The CPU 20 stores the read information into the RAM 22. Furthermore, the CPU 20 transmits the information stored in the RAM 22 to the higher-order device via the communications unit 24. After that, the CPU 20 receives writing information from the higher-order device via the communications unit 24. Also, the CPU 20 stores the received writing information into the RAM 22. In addition, at a step S79, the CPU 20 writes the received writing information into the IC chip of the IC card. When the writing has been terminated, at a step S80, the CPU 20 halts the driving of the contact-point-head solenoid 28, thereby raising the IC contact-point head 16. This allows the IC contact-point head 16 to leave the IC contact-point on the IC card. After that, the CPU 20 proceeds to the step S5 in Fig. 3, then performing the ejection processing of the IC card.

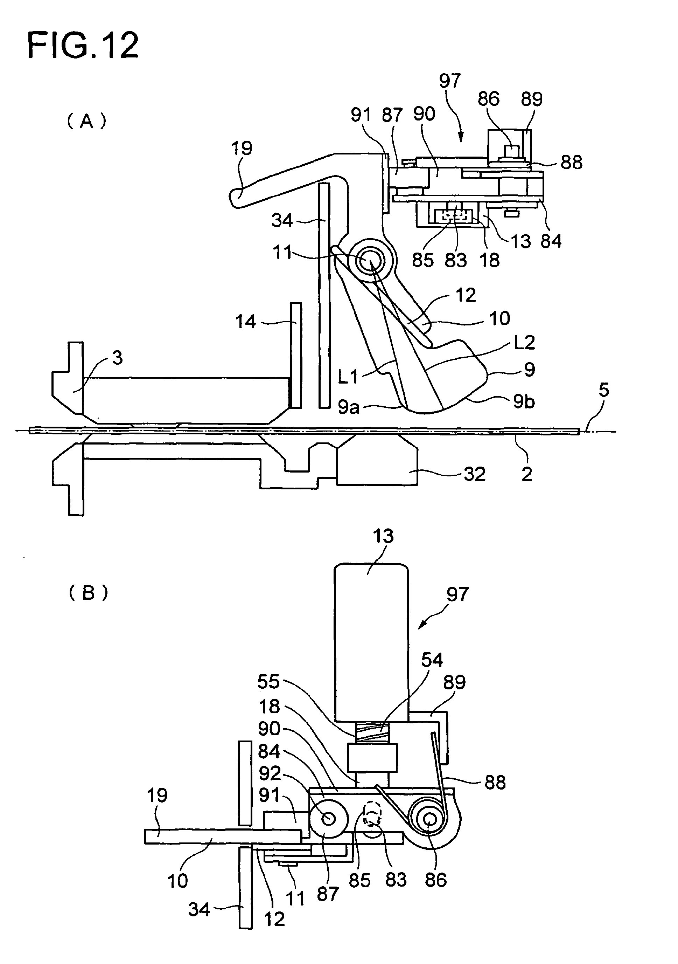

Next, referring to Fig. 12 to Fig. 26, the explanation will be given below concerning the details of the press mechanism provided in the card processing device 1.

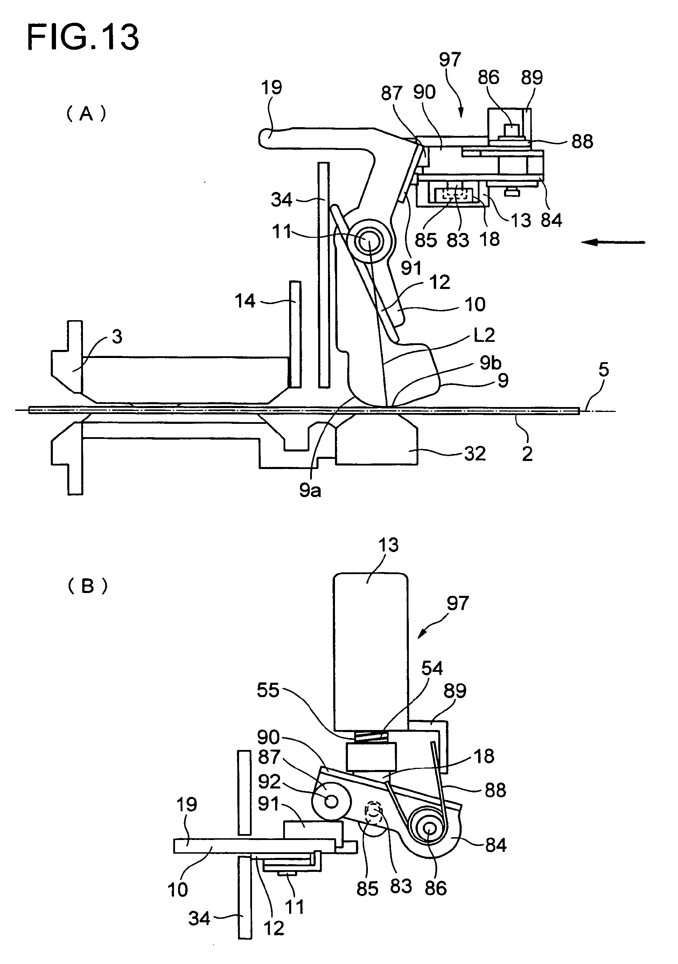

Fig. 12 and Fig. 13 are diagrams for illustrating the press mechanism provided in proximity to the insertion port 3 of the card processing device 1. In the diagrams, (A) illustrates a side view of the press mechanism, and (B) illustrates a plan view thereof. Incidentally, illustrating the components such as the card 2, the insertion port 3, and the shutter 14 is omitted in (B). Fig. 12 illustrates a state where the eccentric-cam solenoid 13 is not driven. The eccentric cam 10 is so provided as to be rotated with the rotation axis 11 as the center. Also, as illustrated in Fig. 12 (A), the eccentric cam 10 is eccentered with reference to the rotation axis 11. An outer circumference 9 of the eccentric cam 10 on the card 2 facing side is formed in a substantially arclike configuration. This does not make constant the distance ranging from the rotation axis 11 of the eccentric cam 10 to the outer circumference 9. The outer circumference 9 of the eccentric cam 10 includes an outer-circumference portion 9a whose distance from the rotation axis 11 is a length L1 which makes no contact with the card 2 being transported on the transportation path 5, and an outer-circumference portion 9b whose distance from the rotation axis 11 is a length L2 which makes contact with the card 2 being transported on the transportation path 5. In the state in Fig. 12 (A), the outer-circumference portion 9a is oriented to the transportation path 5, and accordingly the outer-circumference portion 9a makes no contact with the card 2. However, as will be described later, by rotating the eccentric cam 10 in a clockwise direction with the rotation axis 11 as the center, the outer-circumference portion 9b is oriented to the transportation path 5. This operation, as illustrated in Fig. 13 (A), causes the outer-circumference portion 9b to make contact with the surface of the card 2.

The torsion coil spring 12 is mounted on the rotation axis 11. The torsion coil spring 12 applies the force to the eccentric cam 10 so that the eccentric cam 10 will be rotated in the clockwise direction. This is because the lower-end portion of the torsion coil spring 12 is engaged with the eccentric cam 10. Meanwhile, the upper-end portion of the torsion coil spring 12 is attached on a wall 34.

As illustrated in Fig. 12 (B), a pin 18 is mounted on the front end of a movable iron core 54 of the eccentric-cam solenoid 13. Also, a coil spring 55 is provided on the circumferential surface of the movable iron core 54. The coil spring 55 applies, to the pin 18, an elastic force for causing the pin 18 to leave the eccentric-cam solenoid 13. A supporting member 97 for supporting the upper portion of the eccentric cam 10 is mounted to the pin 18. The supporting member 97 includes components such as a bridge 84, a roller 87, and a coil spring 88. The bridge 84 is rotated with a rotation axis 86 as the center. The rotation axis 86 is fixed to the wall 34 via a not-illustrated member such as a plate or rod. The coil spring 88 is provided on the circumferential surface of the rotation axis 86. One end of the coil spring 88 is attached on a claw 90 protruding from the bridge 84. The other end of the coil spring 88 is attached on a claw 89 fixed to the wall 34 via a not-illustrated member such as a plate or rod. A circular cylinder 83 is provided in the center of the bridge 84. The circular cylinder 83 is inserted into a groove 85 provided in the pin 18. The roller 87 is provided on the left side of the bridge 84. The roller 87 can be rotated with a rotation axis 92 as the center. Also, the roller 87 is in contact with a block 91 mounted on the upper portion of the eccentric cam 10. On account of this, even if the elastic force by the torsion coil spring 12 is going to cause the eccentric cam 10 to be rotated in the clockwise direction with the rotation axis 11 as the center, the rotation of the eccentric cam 10 will be blocked.

When the eccentric-cam solenoid 13 is driven, the movable iron core 54 is pulled into the inside of the eccentric-cam solenoid 13. Then, in Fig. 12 (B), the groove 85 of the pin 18 is displaced in an upward direction. Accordingly, the end of the groove 85 is attached on the circular cylinder 83, and thus the circular cylinder 83 is also displaced in the upward direction. This, in Fig. 12 (B), rotates the bridge 84 in the clockwise direction with the rotation axis 86 as the center. At this time, an elastic force by the coil spring 88 is exerting a counterclockwise-direction force on the bridge 84. The driving force of the eccentric-cam solenoid 13 is larger than a force resulting from summing up the elastic force by the coil spring 88 and an elastic force by the coil spring 55. When the bridge 84 is going to be rotated with the rotation axis 86 as the center, the roller 87 is going to be rotated with the rotation axis 92 as the center. This reduces a friction force which will occur between the roller 87 and the block 91.

In Fig. 12 (A), the eccentric cam 10 is going to be rotated in the clockwise direction with the rotation axis 11 as the center by the elastic force by the torsion coil spring 12. The elastic force by the torsion coil spring 12 is exerted on the bridge 84 from the eccentric cam 10 via the block 91 and the roller 87. In the state in Fig. 12 (A), as shown from Fig. 12 (B) as well, the block 91, the roller 87, and the rotation axis 86 substantially lie side by side on a straight line. On account of this, all of the forces exerted on the bridge 84 are exerted on the rotation axis 86, then being canceled out on the rotation axis 86. Also, a clearance is provided between the groove 85 and the circular cylinder 83. On account of this, the elastic force by the torsion coil spring 12 is not exerted on the pin 18. Consequently, the elastic force by the torsion coil spring 12 is not exerted on the eccentric-cam solenoid 13. Namely, the elastic force for causing the eccentric cam 10 to be rotated with the rotation axis 11 as the center exerts no bad influences on the driving of the eccentric-cam solenoid 13.

When the card processing device 1 has detected the clogging of the card 2, as described above, the eccentric-cam solenoid 13 is driven. Fig. 13 illustrates the state where the eccentric-cam solenoid 13 has been driven. In Fig. 13 (B), the movable iron core 54 and the pin 18 have been displaced up to the upper side. The displacement of the groove 85 has displaced the circular cylinder 83 up to the upper side. The displacement of the circular cylinder 83 is rotating the bridge 84 in the clockwise direction with the rotation axis 86 as the center. Since the roller 87 is detached from the block 91, the eccentric cam 10 is rotated with the rotation axis 11 as the center by the elastic force by the torsion coil spring 12. Consequently, in Fig. 13 (B), the upper portion of the eccentric cam 10 has been displaced onto the right side. At this time, the bridge 84 is going to be rotated in the counterclockwise direction by the elastic force by the coil spring 88. However, the elastic force by the coil spring 88 causes the side surface of the block 91 and the roller 87 to make contact with each other, thereby preventing the bridge 84 from being rotated. As illustrated in Fig. 13 (A), the eccentric cam 10 is rotated in the clockwise direction with the rotation axis 11 as the center. This rotation orients the outer-circumference portion 9b of the eccentric cam 10 toward the transportation path 5, thereby allowing the outer-circumference portion 9b to make contact with the surface of the card 2. At this time, a pressing force is being exerted on the surface of the card 2 from the eccentric cam 10. A base 32 supports the card 2 from below so that this pressing force will be exerted enough on the card 2. The base 32 supports the card 2, which prevents a warp of the card 2.

Accordingly, the eccentric cam 10 has made contact with the surface of the card 2. In addition to the above-described pressing force, this contact also exerts a large friction force between the card 2 and the outer-circumference portion 9b of the eccentric cam 10. On account of this, even if a person who is going to commit an illegal act, using a tool or the like, tries to pull out the clogged card 2 out of the insertion port 3, the person finds it difficult to pull out the clogged card 2 easily. As illustrated in Fig. 13 (A), the state where the outer-circumference portion 9b of the eccentric cam 10 is in contact with the surface of the card 2 will be referred to as "a contact state" for convenience.

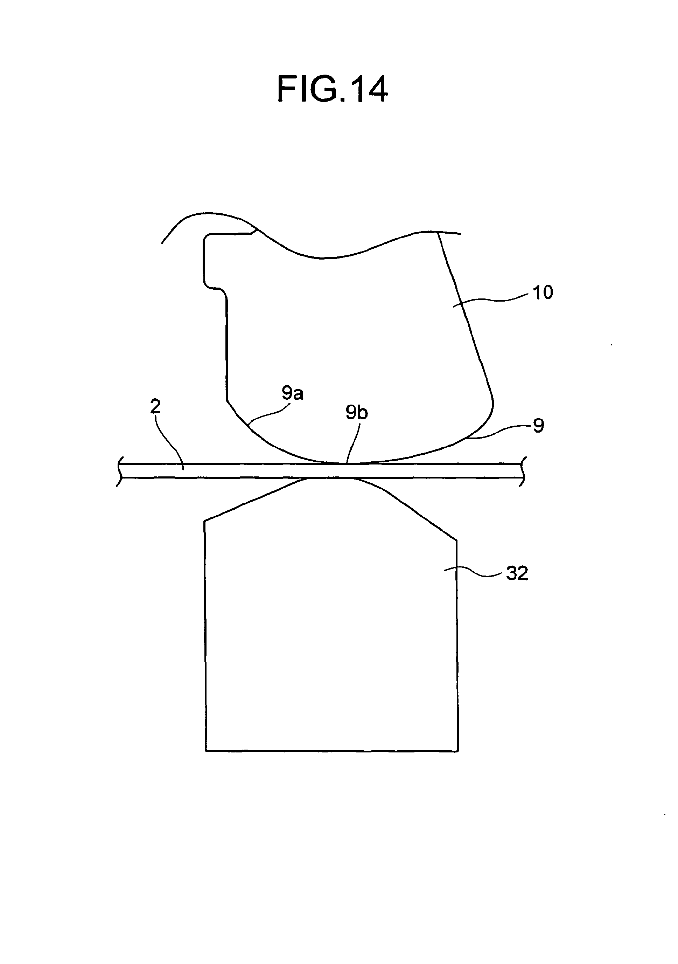

Fig. 14 illustrates an enlarged view of the eccentric cam 10, the card 2, and the base 32 which lie in the contact state. Namely, the outer-circumference portion 9b of the eccentric cam 10 is in contact with the surface of the card 2. The base 32 supports the card 2 from below so that the card 2 will not be warped by the pressing force by the eccentric cam 10.

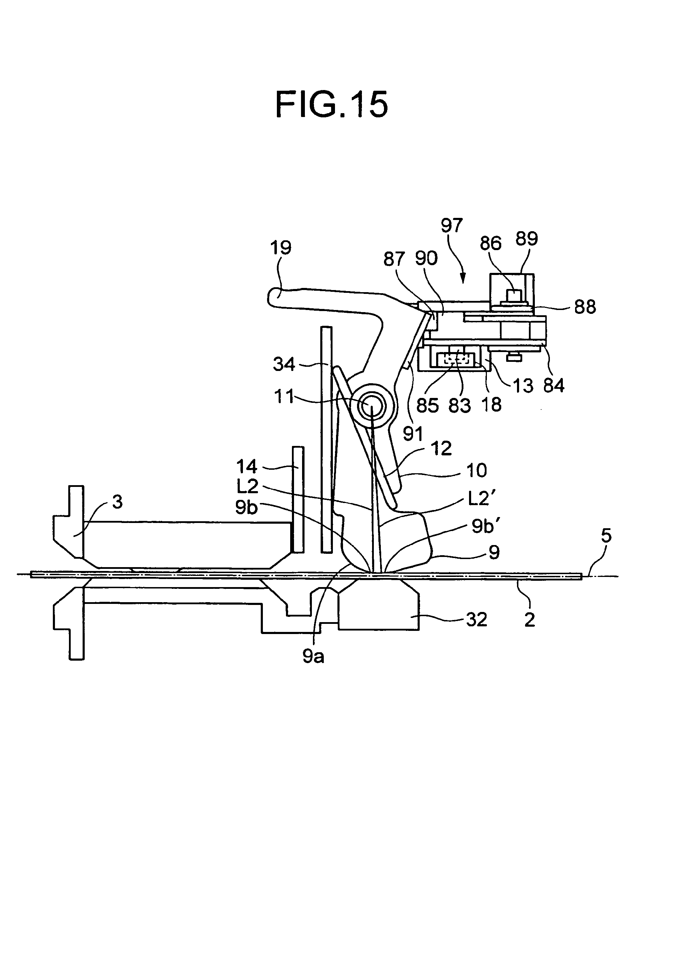

Assume the case where, in the contact state in Fig. 13 (A), the person who is going to commit the illegal act tries to pull out the clogged card 2 out of the insertion port 3 by applying an even stronger force thereto. In this case, by trying to pull out the card 2 with the even stronger force, the friction force existing between the card 2 and the eccentric cam 10 causes the eccentric cam 10 to be further rotated in the clockwise direction with the rotation axis 11 as the center. Then, the outer-circumference portion 9b which is in contact with the surface of the card 2 turns out to be displaced in substantially the same direction as the one in which the card 2 is tried to be pulled out. At this time, the force trying to pull out the card 2 is rotating the eccentric cam 10. Consequently, the eccentric-cam solenoid 13 is exerting no force on the eccentric cam 10. Fig. 15 illustrates this state.

In Fig. 15, the eccentric cam 10 is eccentered with reference to the rotation axis 11. As a result, in Fig. 13 (A), an outer-circumference portion 9b', whose distance L2' from the rotation axis 11 is longer than even the distance L2 of the outer-circumference portion 9b therefrom which is in contact with the card 2, makes contact with the card 2. The distance L2' is longer than the distance L2. On account of this, an even stronger pressing force will be exerted on the surface of the card 2 from the eccentric cam 10. As a consequence, the friction force existing between the eccentric cam 10 and the card 2 also becomes even stronger. This makes it more and more difficult to pull out the card 2.

As illustrated in Fig. 15, by having tried to pull out the card 2, the card 2 has been slightly displaced onto the left side. Also, the eccentric cam 10 has been rotated in the clockwise direction, thus being attached on the wall 34. The eccentric cam 10 is attached on the wall 34. This condition prevents the eccentric cam 10 from being rotated in the clockwise direction, thereby preventing the eccentric cam 10 from being detached from the surface of the card 2. As illustrated in Fig. 15, the state where the outer-circumference portion 9b' of the eccentric cam 10 is in contact with the surface of the card 2 in a manner of being pressed into the surface will be referred to as "a fixed state" for convenience.

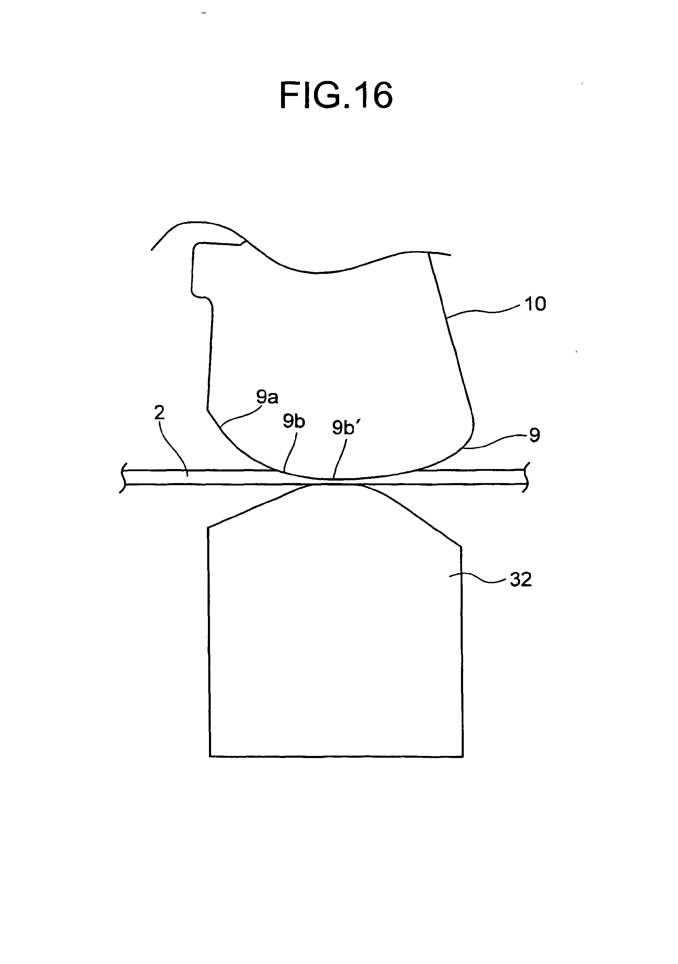

Fig. 16 illustrates an enlarged view of the eccentric cam 10, the card 2, and the base 32 which lie in the fixed state. Namely, the outer-circumference portion 9b' of the eccentric cam 10 is in contact with the surface of the card 2, and the eccentric cam 10 bites into the surface of the card 2. On account of this, when trying to pull out the card 2, the eccentric cam 10 is displaced by accompanying the card 2, being caused to be rotated in the clockwise direction. At this time, however, the eccentric cam 10 is attached on the wall 34 as illustrated in Fig. 15. As a result, the eccentric cam 10 will not be rotated. Consequently, it is difficult to pull out the card 2. On account of this, when trying to pull out the card 2 forcefully, the card 2 will be damaged.

Assume that a power failure occurs in the state where the eccentric cam 10 is in contact with the card 2. The power failure halts the driving of the eccentric-cam solenoid 13. At this time, as illustrated in Fig. 13 (B), the coil spring 55 provided on the circumferential surface of the movable iron core 54 is extended. On account of this, the elastic force by the coil spring 55 displaces the pin 18 in the downward direction in Fig. 13 (B). As a result, the bridge 84 is going to be rotated in the counterclockwise direction. The existence of the block 91, however, prevents the bridge 84 from being rotated. Consequently, it turns out that the elastic force by the torsion coil spring 12 causes the eccentric cam 10 to continue to be in contact with the card 2. Accordingly, even if the power failure has occurred, the state is maintained which will block the card 2 from being pulled out. Namely, once the press mechanism has been activated, the elastic force by the torsion coil spring 12 maintains this state. As a consequence, even if the power failure has occurred, the press mechanism suffers from none of the influences exerted thereby.

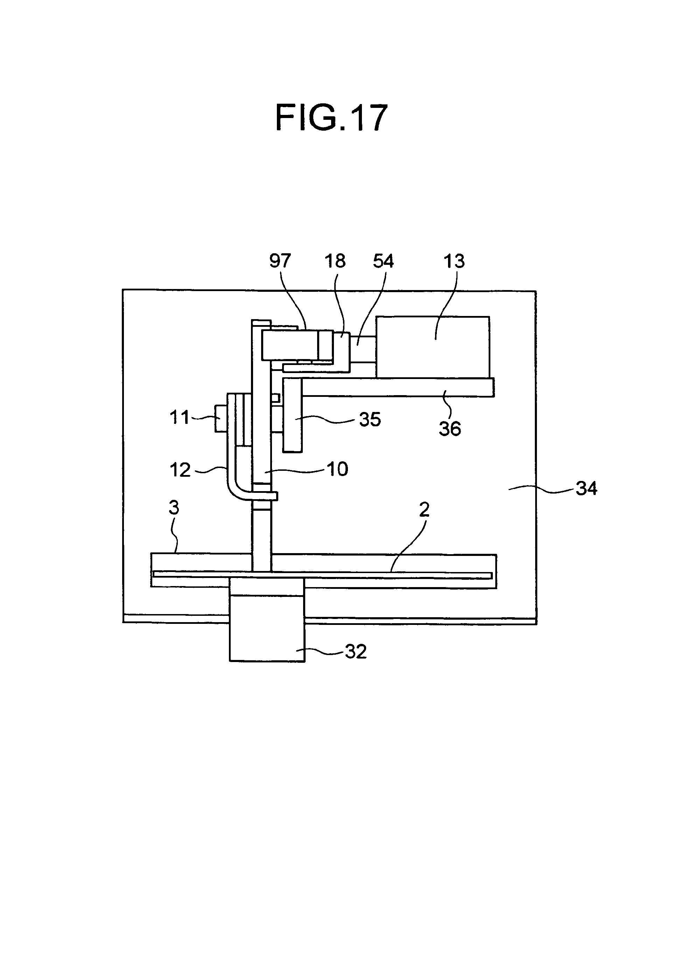

Fig. 17 is a diagram for illustrating the press mechanism seen from an arrow direction in Fig. 13 (A). In the present diagram, the above-described supporting member 97 is illustrated in a simplified manner. The eccentric cam 10 has a thickness which is capable of withstanding the pressing force on the card 2 exerted by the elastic force by the torsion coil spring 12. Increasing the thickness of the eccentric cam 10 makes it possible to increase the friction force between the outer-circumference portion 9b of the eccentric cam 10 and the card 2. The eccentric cam 10 is rotatably mounted on the rotation axis 11. The rotation axis 11 is mounted on a mount plate 35. The eccentric-cam solenoid 13 is mounted on a mount plate 36. The mount plates 35 and 36 are mounted on the wall 34. In Fig. 12 and Fig. 13, the mount plates 35 and 36 are omitted so as to make the eccentric cam 10 easy to see. The base 32 is formed more thickly than the eccentric cam 10 so that the card 2 will not be warped.

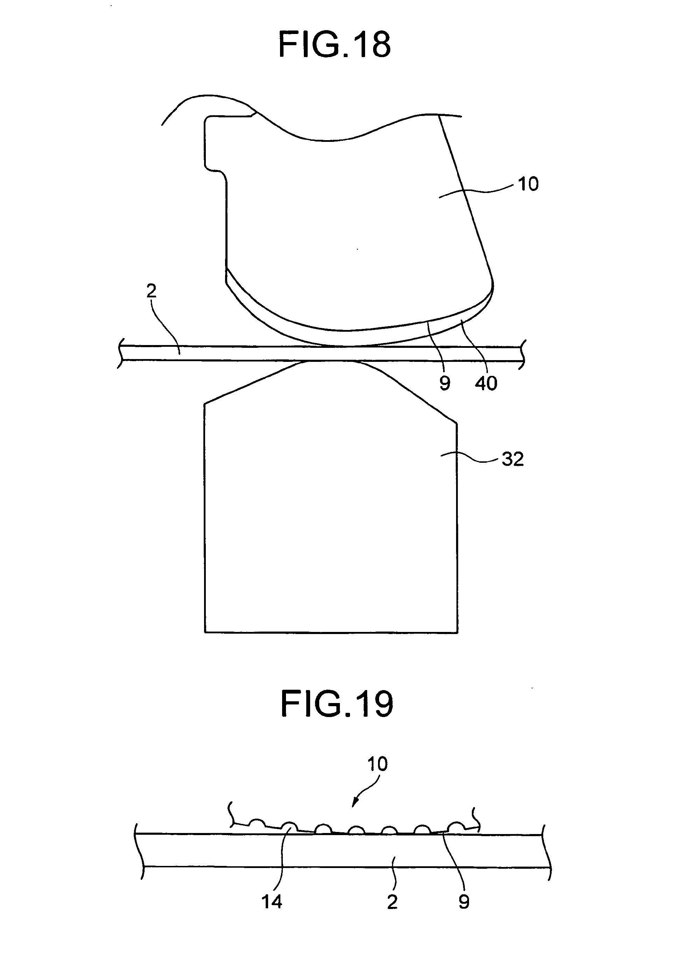

Mounting a difficult-to-slip material such as rubber on the outer circumference 9 of the eccentric cam 10 makes it possible to increase the friction force between the eccentric cam 10 and the card 2. Fig. 18 is an enlarged view of the outer circumference 9 and the card 2 being in contact with the outer circumference 9 in the case where a rubber 40 is attached on the outer circumference 9 of the eccentric cam 10.

Also, by providing projections and depressions on the outer circumference 9 of the eccentric cam 10, it becomes possible to increase the friction force between the eccentric cam 10 and the card 2. This is because the projection portions on the eccentric cam 10 bite into the surface of the card 2. Fig. 19 is an enlarged view of the outer circumference 9 and the card 2 being in contact with the outer circumference 9 in the case where projections and depressions 41 are provided on the outer circumference 9 of the eccentric cam 10. It is preferable that, when the contact state is transitioned to the fixed state, the length of the outer circumference 9 in which the eccentric cam 10 is in contact with the card 2 be smaller than the spacing between the projections and depressions 41.

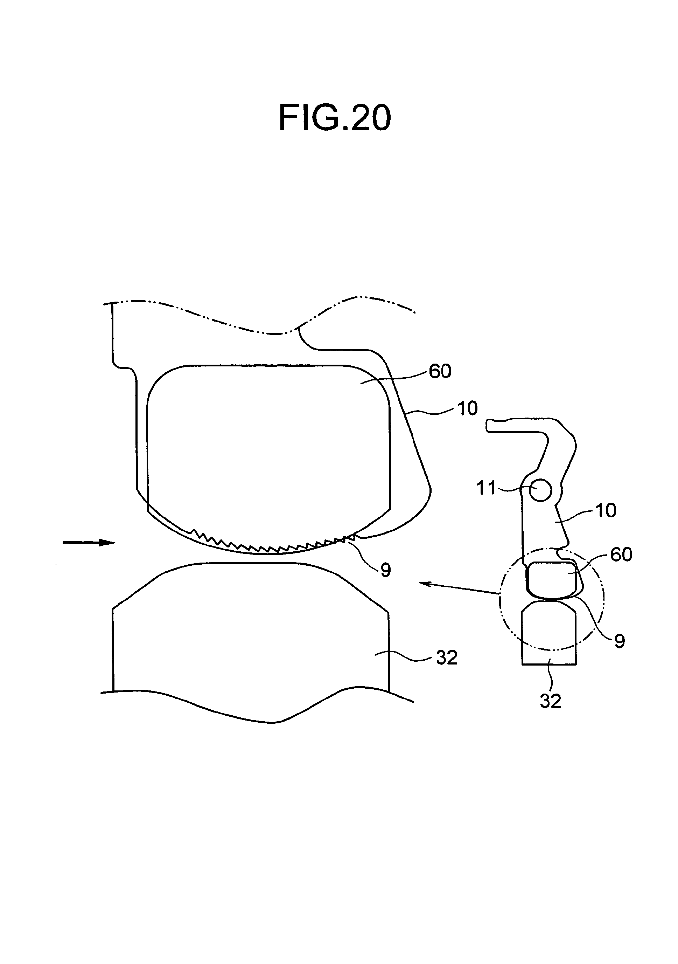

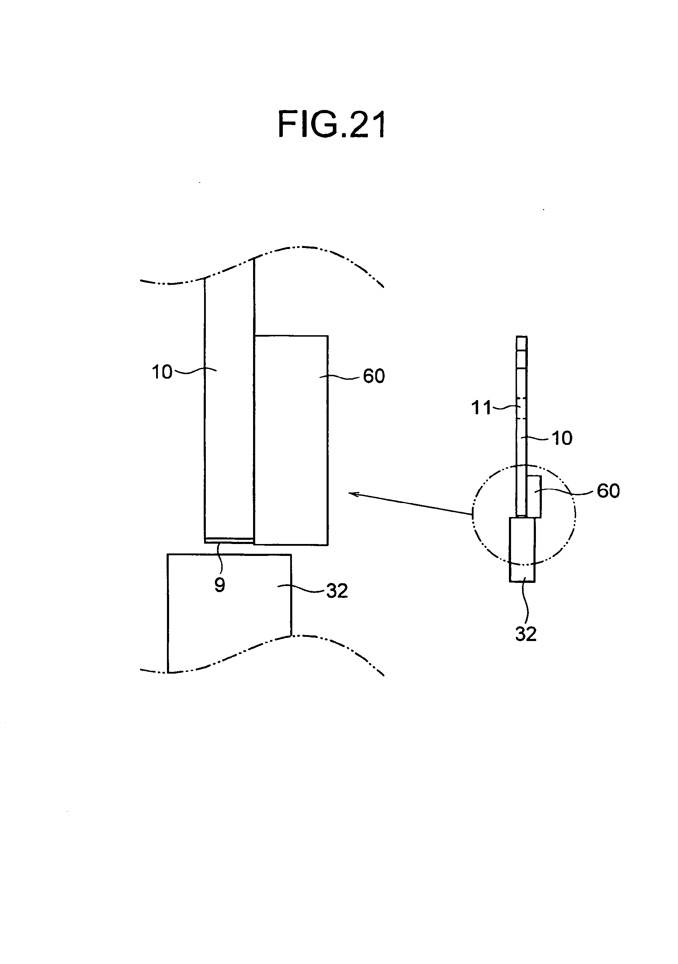

Also, by attaching a rubber on the surface in proximity to the projections and depressions provided on the outer circumference 9 of the eccentric cam 10, it becomes possible to further increase the friction force between the eccentric cam 10 and the card 2. Fig. 20 and Fig. 21 are diagrams for illustrating the eccentric cam 10 and a rubber 60 attached on the side surface of the eccentric cam 10. Fig. 21 illustrates a state where the eccentric cam 10 and the rubber 60 are seen from a thick-arrow direction in Fig. 20. The rubber 60 protrudes on the lower side than the outer circumference 9 of the eccentric cam 10. On account of this, the outer circumference 9 hides behind the rubber 60. Incidentally, the saw-blade-shaped projections and depressions are provided on the outer circumference 9. On account of this, the component which makes contact with the card 2 first is the rubber 60. The rubber 60 causes a large friction force to occur between the rubber 60 and the card 2. On account of this, when trying to pull out the card 2 in the state where the rubber 60 is in contact with the surface of the card 2, the eccentric cam 10 accompanies the displacement of the card 2, thereby being caused to be rotated together with the rubber 60. Moreover, since the eccentric cam 10 is eccentered, the rubber 60 and the eccentric cam 10 press the surface of the card 2. Then, the rubber 60 is depressed because of its elasticity, and the projection portions of the projections and depressions on the outer circumference 9 bite into the surface of the card 2. When trying to pull out the card 2 after the press mechanism has been activated, this bite-in makes it more likely that the eccentric cam 10 on which the rubber 60 is attached will follow the displacement of the card 2. As a consequence, the eccentric cam 10 is rotated in the clockwise direction without fail. This makes it possible to prevent the card 2 from being taken out.

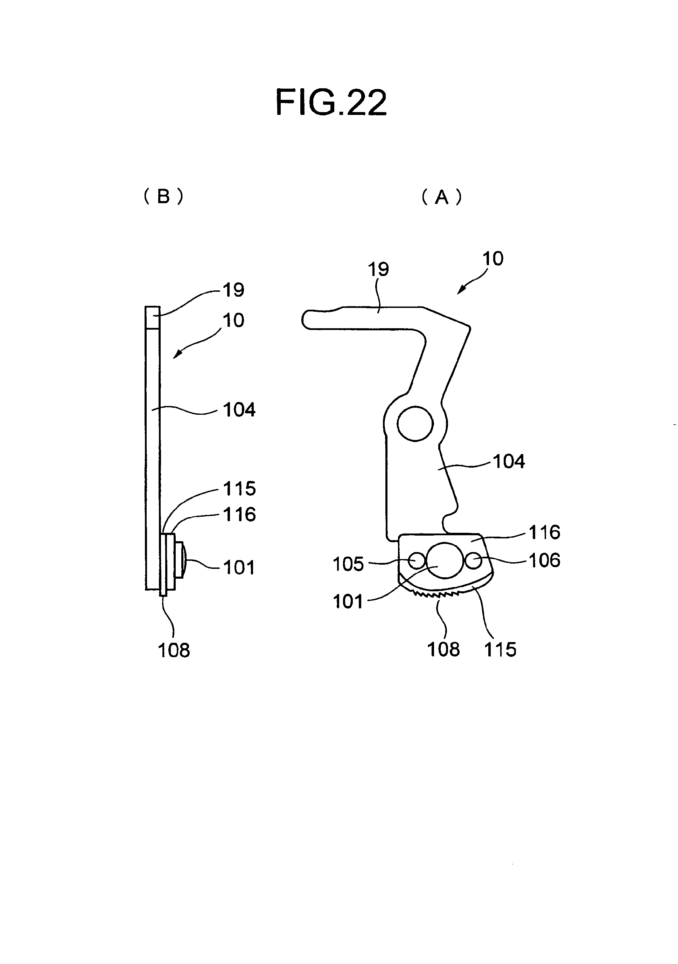

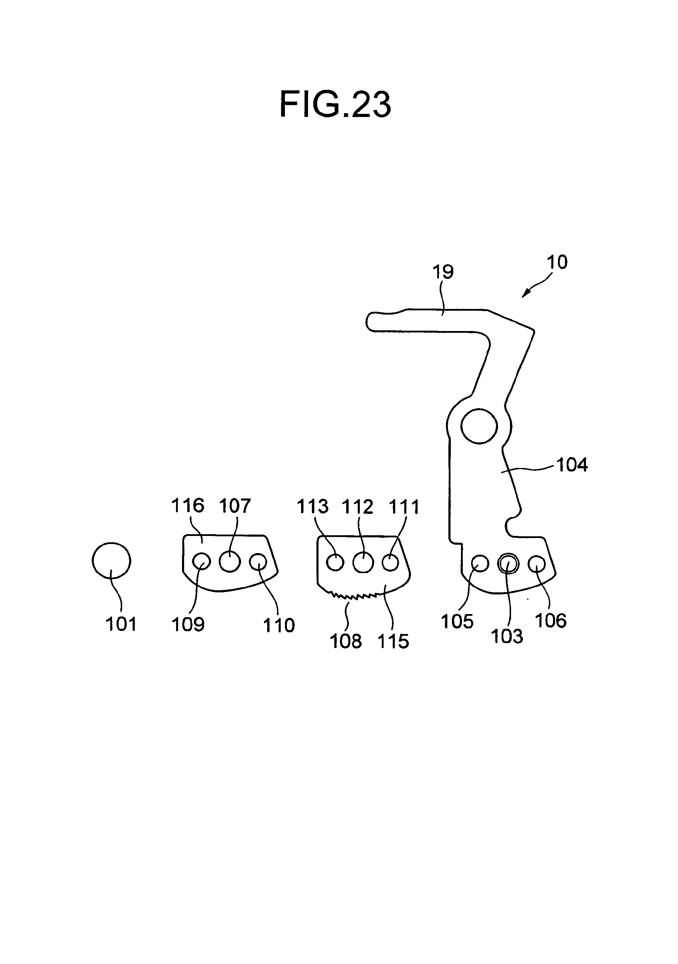

Also, a blade, which is equipped with projections and depressions and will make contact with the card 2, is provided on the eccentric cam 10 in a removable manner. This makes it possible to prevent wear-out of the eccentric cam 10 itself. Fig. 22 and Fig. 23 are diagrams for illustrating the eccentric cam 10 and a blade 108 equipped with projections and depressions. Fig. 22 (A) illustrates a side view of the eccentric cam 10 on which the blade 108 is mounted. Fig. 22 (B) illustrates a front view of the eccentric cam 10 on which the blade 108 is mounted. A plate 115 is mounted on the eccentric cam 10. The blade 108 is provided on the front end of the plate 115. The blade 108 includes saw-blade-shaped projections and depressions. The plate 115 is mounted on the eccentric cam 10 by a screw 101. A plate 116 is sandwiched between the screw 101 and the plate 115 so that the screw 101 will not become loosened.

Fig. 23 illustrates a state where the blade 108 is removed from the eccentric cam 10. A screw hole 103 and circular cylinders 105 and 106 are provided on the lower side of the eccentric cam 10. In Fig. 23, the circular cylinders 105 and 106 protrude onto the upper side of the paper plane. Holes 113 and 109 for inserting therein the circular cylinder 105 are provided in the plate 115 and the plate 116. Holes 111 and 110 for inserting therein the circular cylinder 106 are provided in the plate 115 and the plate 116. This configuration prevents the plate 115 from being rotated with the screw 101 as the center by a friction force which is caused to occur when the card 2 and the plate 115 make contact with each other. The plate 116 covers the plate 115 except the portion of the blade 108. This configuration allows the plate 116 to reinforce the plate 115 on which the blade 108 is provided.

The eccentric cam 10 and the plate 115 on which the blade 108 is provided are configured such that they can be disassembled. This configuration allows only the plate 115 to be replaced if the blade 108 of the plate 115 becomes chipped or is worn out. Replacing only the plate 115 is easier as compared with replacement of the entire eccentric cam 10. Also, the material of the eccentric cam 10 and that of the plate 115 on which the blade 108 is provided can be made different. For example, a hardening processing can be applied to the blade 108. This allows the thickness of the blade 108 to be made thin, thereby making it easier for the blade 108 to be pressed into the surface of the card 2.

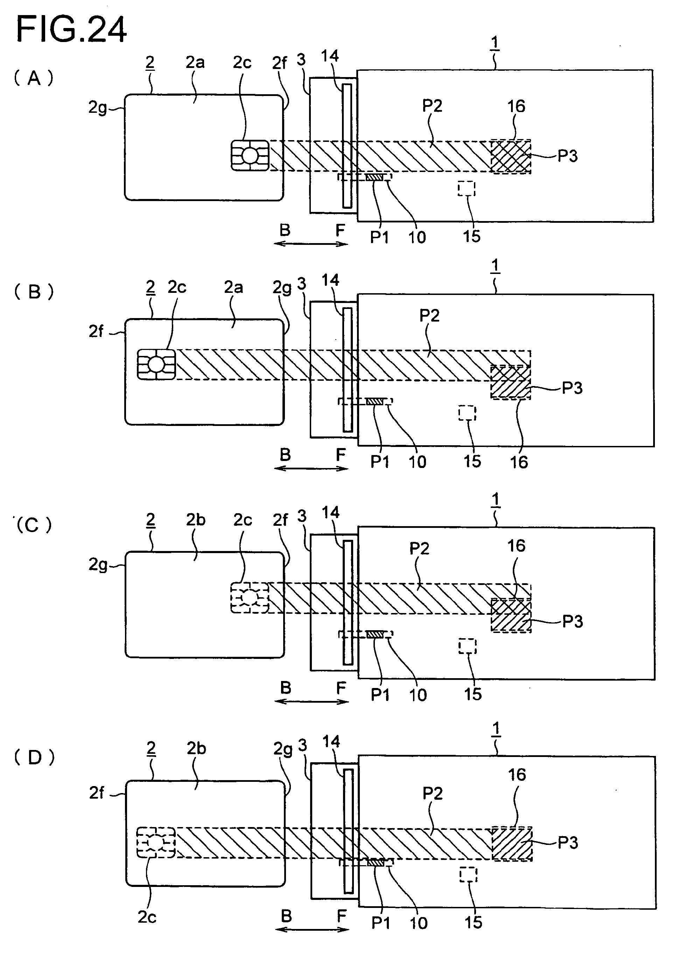

Fig. 24 is a schematic plan view for illustrating the card processing device 1. The present diagram illustrates by dashed lines the eccentric cam 10, the magnetic head 15, and the IC contact-point head 16 which are provided inside the card processing device 1. Also, the card 2 illustrated in the present diagram is a contact-type IC card having an IC contact-point 2c provided at a predetermined position on the surface 2a. The position at which the IC contact-point 2c is to be provided on the card 2 is defined by some standards and the like.

In Fig. 24, a position P1 at which the outer-circumference portion 9b or 9b' of the eccentric cam 10 presses the card surface 2a or 2b of the card 2, and a position P3 at which the IC contact-point head 16 makes contact with the card surface 2a or 2b of the card 2 do not lie side by side on a straight line which is parallel to the insertion direction F and the pull-out direction B of the card 2. Namely, the eccentric cam 10 is mounted onto the rotation axis 11 such that the press position P1 is located in a manner of not lying side by side with the contact position P3 of the IC contact-point head 16 on the straight line which is parallel to the insertion direction F of the card 2.

As illustrated in Fig. 24 (A), if the card 2 had been inserted into the insertion port 3 in an authorized posture that the surface 2a is oriented upwards and that a front-end portion 2f whose distance from the IC contact-point 2c is nearer is oriented to the card processing device 1, the card 2 is transported by the rollers 4 (Fig. 1), and thereby, the IC contact-point 2c will pass through a P2 position. Also, as illustrated in Fig. 24 (B), if the card 2 had been inserted into the insertion port 3 in a wrong posture that a rear-end portion 2g is oriented to the card processing device 1, the card 2 is transported by the rollers 4, and thereby, the IC contact-point 2c will pass through the P2 position. Also, as illustrated in Fig. 24 (C), if the card 2 had been inserted into the insertion port 3 in a wrong posture that the back-side surface 2b is oriented upwards, the card 2 is transported by the rollers 4, and thereby, the IC contact-point 2c will pass through the P2 position. Furthermore, as illustrated in Fig. 24 (D), if the card 2 had been inserted into the insertion port 3 in a wrong posture that the back-side surface 2b is oriented upwards, and that the rear-end portion 2g is oriented to the card processing device 1, the card 2 is transported by the rollers 4, and thereby, the IC contact-point 2c will pass through the P2 position. Even if the card 2 had been inserted in any of the postures illustrated in Fig. 24 (A) to Fig. 24 (D), the press position P1 of the eccentric cam 10, and the position P2 through which the IC contact-point 2c on the card 2 will pass do not lie side by side on a straight line which is parallel to the insertion direction F of the card 2. Namely, the eccentric cam 10 is mounted onto the rotation axis 11 such that the press position P1 is located in a manner of not lying side by side with the pass-thorough position P2 of the IC contact-point 2c on the straight line which is parallel to the insertion direction F of the card 2.

After the card 2 had been inserted in any of the postures illustrated in Fig. 24 (A) to Fig. 24 (D), the eccentric-cam solenoid 13 is driven. At this time, the eccentric cam 10 is located as described above. As a result of this location, the elastic force by the torsion coil spring 12 causes the eccentric cam 10 to make contact with the card 2, thereby allowing a portion other than the IC contact-point 2c on the IC card 2 to be accurately pressed. The portion other than the IC contact-point 2c on the IC card 2 (such as an emboss portion) is softer and more difficult to slip as compared with the IC contact-point. Consequently, pressing this portion by the eccentric cam 10 results in no slippery of the eccentric cam 10 on the IC card 2, eventually allowing a strong friction force to occur between the eccentric cam 10 and the IC card 2. This friction force blocks the card 2 from being taken out of the insertion port 3, even if a person who is going to commit an illegal act tries to pull out the card 2 forcefully after the card 2 has been pressed by the eccentric cam 10. Also, the IC contact-point 2c on the card 2 will never be hurt and damaged by the eccentric cam 10.

For example, consider the case of releasing the state where the press mechanism as illustrated in Fig. 13 has been activated, i.e., the state where the eccentric cam 10 is in contact with the card 2. In order to do this, the person in charge or the like removes the cover covering the card processing device 1, and pulls a lever 19 in a left-downward direction. This causes the eccentric cam 10 to be rotated in the counterclockwise direction with the rotation axis 11 as the center. Then, the right-upper portion of the eccentric cam 10 is displaced onto the left side. Accordingly, the bridge 84 is rotated in the counterclockwise direction by the elastic force by the coil spring 88, thus returning back to the state which is perpendicular to the pin 18 as illustrated in Fig. 12 (B). After that, the person in charge or the like sets the lever free. As a result, the eccentric cam 10 is going to be rotated in the clockwise direction by the elastic force by the torsion coil spring 12. However, the block 91 and the roller 87 are in contact with each other, which prevents the eccentric cam 10 from being rotated in the clockwise direction. Consequently, the eccentric cam 10 is halted in the state of having left the card 2 as illustrated in Fig. 12 (A). This allows the person in charge or the like to remove the clogged card 2.

Meanwhile, in the state illustrated in Fig. 13, when trying to press the card 2 into the inside of the card processing device 1, the card 2 will easily be pressed in. Also, the use of the roller 4 makes it possible to try to take the card 2 into the inside of the card processing device 1. This is because a force which causes the eccentric cam 10 to be rotated in the clockwise direction is only the force generated by the torsion coil spring 12.

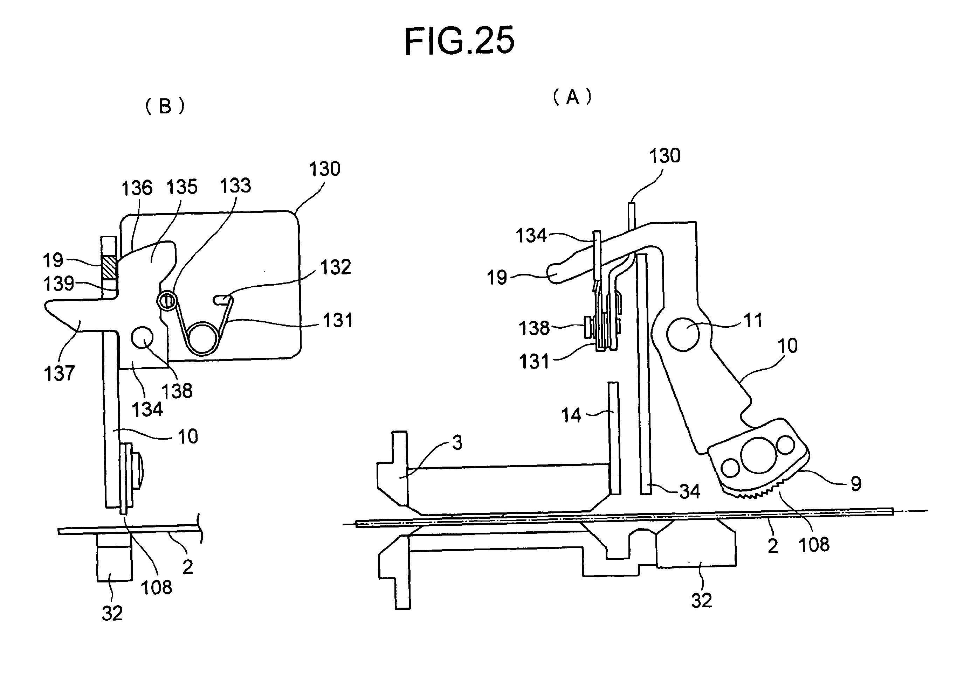

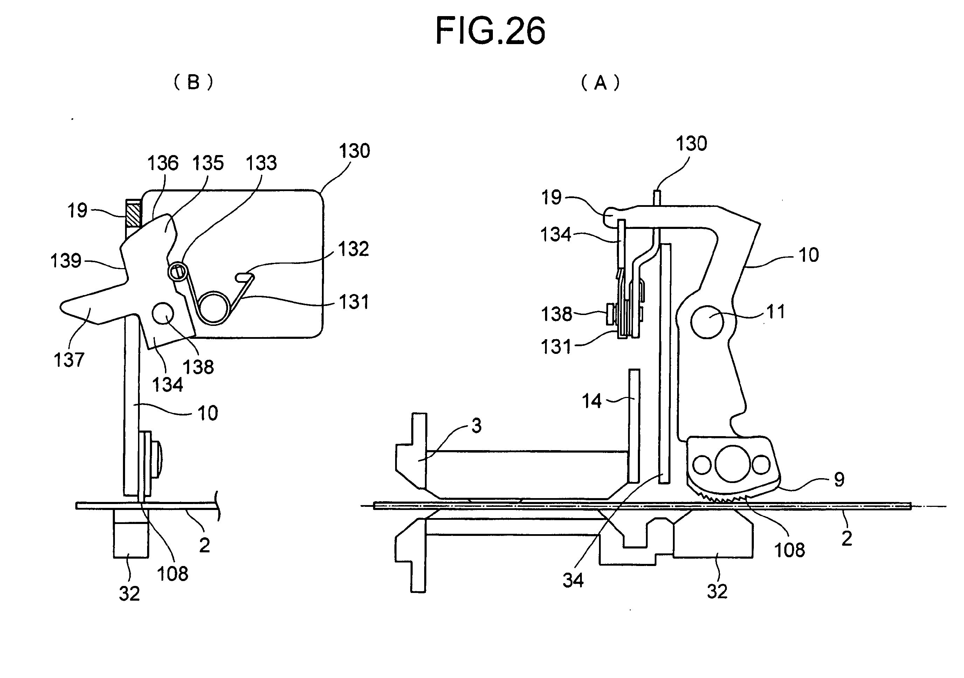

When the eccentric cam 10 is transitioned into the fixed state illustrated in Fig. 15, a fixing member for fixing the position of the eccentric cam 10 is provided. This makes it possible to prevent the card 2 from being displaced even if the card 2 is pressed or pulled from the outside of the card processing device 1. Fig. 25 and Fig. 26 are diagrams for illustrating the press mechanism in which a fixing member 134 is provided. In the diagrams, (A) illustrates a side view of the press mechanism, and (B) illustrates a front view thereof. Incidentally, in (A) and (B), illustrating the components is omitted such as the supporting member 97, the eccentric-cam solenoid 13, and the coil spring 12. Also, in (B), illustrating the components is omitted such as the wall 34, the shutter 14, and the insertion port 3. Also, the blade 108 explained in Fig. 22 and Fig. 23 is mounted on the eccentric cam 10 illustrated in the present diagrams.

Fig. 25 illustrates a state where the eccentric-cam solenoid 13 is not driven. A base 130 is mounted on the wall 34. The fixing member 134 is mounted such that it is rotated with a rotation axis 138 of the base 130 as the center. The fixing member 134 fixes the position of the eccentric cam 10. In Fig. 25 (B), a claw 137 is provided on the left side of the fixing member 134. A claw 135 is provided on the upper side of the fixing member 134. One end of a coil spring 131 is mounted on a claw 133 on the right side of the fixing member 134. In Fig. 25 (B), the claw 133 on the right side protrudes in the upward direction from the paper plane. A loop provided at the front end of the coil spring 131 is hanged on the protruding claw 133 on the right side. The other end of the coil spring 131 is mounted on a hole 132 of the base 130. In Fig. 25 (B), the coil at the other end of the coil spring 131 protrudes on the lower side of the paper plane. The protruding coil is hooked on the hole 132. On account of this, a force which will cause the fixing member 134 to be rotated in the counterclockwise direction is exerted on the fixing member 134 by an elastic force by the coil spring 131. A left side 139 of the fixing member 134 is attached on the lever 19. This halts the rotation of the fixing member 134 in the state illustrated in Fig. 25 (B). In Fig. 25 (B), the lever 19 is illustrated by hatching.

When the card processing device 1 has detected the clogging of the card 2, the eccentric-cam solenoid 13 is driven. Incidentally, in Fig. 25, the eccentric-cam solenoid 13 is not illustrated. If the eccentric-cam solenoid 13 has been driven, in Fig. 25 (A), the eccentric cam 10 is rotated in the clockwise direction with the rotation axis 11 as the center. Moreover, the blade 108 mounted on the outer circumference 9 makes contact with the card 2. Fig. 26 illustrates the state at this time.

In Fig. 26, the blade 108 is in contact with the card 2. Here, when trying to pull out the card 2, the eccentric cam 10 is going to be further rotated in the clockwise direction by a friction force between the blade 108 and the card 2. This further presses the blade 108 on the card 2, since the eccentric cam 10 is eccentered. This blocks the card 2 from being pulled out.

Since the eccentric cam 10 has been rotated in the clockwise direction, in Fig. 26 (A), the lever 19 of the eccentric cam 10 has been displaced in a right-upward direction. On account of this, as illustrated in Fig. 26 (B), the lever 19 is detached from the left side 139 of the fixing member 134. Accordingly, the fixing member 134 is rotated in the counterclockwise direction with the rotation axis 138 as the center by the elastic force by the coil spring 131. Furthermore, at a position at which the claw 135 on the upper side and the lever 19 make contact with each other, the rotation of the fixing member 134 is halted. This prevents the lever 19 from being displaced on the lower side.

Consider the case where, in the state where the claw 135 on the upper side and the lever 19 are in contact with each other, the card 2 is further inserted into the card processing device 1 from the insertion port 3. At this time, the eccentric cam 10 is going to be rotated in the counterclockwise direction by the friction force between the card 2 and the blade 108. At this time, in Fig. 26 (A), the lever 19 is going to be displaced in a left-downward direction. However, since the claw 135 of the fixing member 134 and the lever 19 are in contact with each other, the eccentric cam 10 finds it impossible to be rotated in the counterclockwise direction. On account of this, even if the card 2 is pressed from the outside of the card processing device 1, the eccentric cam 10 will not be rotated. This prevents the card 2 from being displaced. Meanwhile, if the card 2 is pulled from the outside, the friction force between the card 2 and the blade 108 causes the eccentric cam 10 to be rotated in the clockwise direction, thereby further pressing the blade 108 on the surface of the card 2. This makes it impossible to pull out the card 2.

Consequently, even if the card 2 transitioned into the fixed state is pulled or pressed from the outside of the card processing device 1, the card 2 will not be displaced. This makes it possible to prevent the card 2 clogged in the card processing device 1 from being carried away.

In order to release the state where the eccentric cam 10 is fixed, in Fig. 26 (B), the claw 137 of the fixing member 134 is lifted up in the upward direction, thereby being caused to be rotated in the clockwise direction. In addition, in Fig. 26 (A), the lever 19 is pressed down, thereby causing the eccentric cam 10 to be rotated in the counterclockwise direction. Then, as described earlier, the supporting member 97 provided at the front end of the eccentric-cam solenoid 13 makes contact with the eccentric cam 10. As a result, the position of the eccentric cam 10 is fixed, thus returning back to the state illustrated in Fig. 25. At this time, as illustrated in Fig. 25 (A), the blade 108 is lifted up from the surface of the card 2.

In order to increase the friction force between the lever 19 and the claw 135 of the fixing member 134, it is possible to provide a saw-shaped blade on an outer circumference 136 of the claw 135. Also, it is possible to attach a rubber on the outer circumference 136 of the claw 135.

As having been explained so far, when an abnormality has been detected, such as the case where the card 2 has been clogged in the transportation path 5, the eccentric-cam solenoid 13 is driven. This driving allows the eccentric cam 10 to be rotated by the elastic force by the torsion coil spring 12, thereby making it possible to cause the eccentric cam 10 to make contact with the card 2. Consequently, it becomes possible to press the card 2 by the eccentric cam 10, and thereby to block the card 2 from being displaced. Namely, once the force has been applied to the card 2 by the eccentric-cam solenoid 13 and the torsion coil spring 12, it becomes possible to press the card surface 2a or 2b of the card 2 by the eccentric cam 10, and thereby to block the card 2 from being taken out of the insertion port 3. As a consequence, it is made executable to prevent a crime that a person who is going to commit an illegal act carries away the clogged card 2, and makes the misuse of it.

Also, as illustrated in Fig. 24, the position P1 at which the eccentric cam 10 presses the card 2, and the position P3 at which the IC contact-point head 16 makes contact with the card 2 are located such that the two positions will not lie side by side on the straight line which is parallel to the card insertion direction F. Even if the card 2 inserted is the IC card, this location allows the portion other than the IC contact-point 2c on the IC card 2 to be accurately pressed by the eccentric cam 10 when an abnormality has been detected. This causes the strong friction force to occur between the eccentric cam 10 and the IC card, thereby making it possible to block the IC card without fail from being taken out of the insertion port 3. Also, it becomes possible to avoid that the IC contact-point 2c on the card 2 will be damaged by the eccentric cam 10. As a consequence, when a person in charge afterwards releases the press mechanism to remove the IC card with the abnormality, it becomes possible to perform an information reading or writing from or into the removed IC card via the IC contact-point 2c. Namely, reusing the IC card becomes executable.

Furthermore, as illustrated in Fig. 24, the position P1 at which the eccentric cam 10 presses the card 2, and the position P2 through which the IC contact-point 2c on the card 2 will pass are located such that the two positions will not lie side by side on the straight line which is parallel to the card insertion direction F. This location allows the portion other than the IC contact-point 2c on the IC card 2 to be accurately pressed by the eccentric cam 10 not only when the IC card had been inserted from the insertion port 3 in an authorized posture, but also when the IC card had been inserted therefrom in a wrong posture. Here, the wrong posture is such that the front and rear ends of the IC card are reversed, or the right and back sides thereof are reversed. This makes it possible to block the IC card without fail from being taken out of the insertion port 3.

In the present invention, various types of embodiments are employable in addition to the above-described embodiment. For example, in the above-described embodiment, as an example, the press mechanism has been employed that the eccentric cam 10 is caused to be rotated so as to press the card surface 2a or 2b of the card 2 by the outer-circumference portion 9b or 9b' of the eccentric cam 10. The present invention, however, is not limited thereto. Other than this embodiment, the following embodiments are also preferable as the press mechanism: For example, a tip-pointed rod-shaped member is displaced perpendicularly to the card surface of the card, and the card surface is pressed in such a manner that the card surface is pierced with the tip of the rod-shaped member. Otherwise, a tip-flat pillar-shaped member is displaced obliquely to the card surface of the card, and the card surface is pressed with the tip of the pillar-shaped member. Namely, as the press mechanism, whatever mechanism is preferable as long as it is a mechanism which allows the portion other than the IC contact-point on the card to be pressed by a predetermined press member, and thereby makes it possible to block the card from being taken out of the insertion port.

Also, in the above-described embodiment, the present invention has been applied to the card processing device 1 which is capable of processing both the contact-type IC card and the magnetic card. The present invention, however, is applicable to various types of card processing devices such as a device specific to the contact-type IC card, a device capable of processing a magnetic-stripe equipped contact-type IC card, and a device capable of processing a contact/non-contact co-use-type IC card.

## Claims

1. A card processing device (1), comprising:
an insertion port (3) for inserting an IC card (2) therein, said IC card (2) having an IC contact-point provided at a predetermined position on the card surface,
an IC contact-point head (16) for making contact with said IC contact-point on said IC card (2) inserted from said insertion port, and reading information from said IC card (2) or writing information into said IC card (2), and
a press mechanism for pressing said card surface of said IC card in order to block said inserted IC card (2) from being taken out of said insertion port (3),
**characterized in that** the press mechanism comprises a rotatable eccentric cam (10) with varying distance between its rotation axis (11) and its outer circumference (9a, 9b),
wherein the eccentric cam (10) and the IC contact-point head (16) are arranged such that the positions at which they contact the card surface of the IC card do not lie on a straight line parallel to the insertion direction of said IC card, and
wherein the press mechanism is arranged such that a rotation of the eccentric cam (10) causes the outer circumference of the eccentric cam (10) to contact the surface of the inserted IC card and to exert a pressing force on it, and that a subsequent extraction movement of the inserted card causes a further rotation of the eccentric cam (10) and an increased pressing force on the card surface.

2. A combination of an IC card and the card processing device of claim 1, wherein the eccentric cam (10) and the IC contact-point head (16) are arranged such that the position at which the eccentric cam (10) contacts the card surface of the IC card, and a position through which an IC contact-point on said IC card passes after the IC card had been inserted through said insertion port in an authorized or a wrong posture do not lie on a straight line parallel to the insertion direction of said IC card.

## Patentansprüche

1. Kartenbehandlungsvorrichtung (1) mit
einer Einführöffnung (3) zum Einführen einer IC-Karte (2), die einen an einer vorgegebenen Stelle auf der Kartenoberfläche vorgesehenen IC-Kontaktpunkt aufweist,
einen IC-Kontaktpunktkopf (16) zur Herbeiführung von Kontakt mit dem IC-Kontaktpunkt auf der in die Einführöffnung eingeführte IC-Karte (2) und zum Lesen von Informationen von der IC-Karte (2) oder Schreiben von Informationen auf die IC-Karte (2), und
einen Druckmechanismus zum Ausüben von Druck auf die Kartenoberfläche der IC-Karte, um die eingeführte IC-Karte (2) gegen ein Herausnehmen aus der Einführöffnung (3) zu blockieren,
**gekennzeichnet dadurch, daß** der Druckmechanismus eine rotierbare exzentrische Nocke (10) mit variierendem Abstand zwischen ihrer Rotationsachse (11) und ihrem Außenumfang (9a, 9b) umfaßt,
wobei die exzentrische Nocke (10) und der IC-Kontaktpunktkopf (16) so ausgelegt sind, daß die Stellen, an denen sie sich in Kontakt mit der Kartenoberfläche der IC-Karte befinden, nicht auf einer zur Einführrichtung der IC-Karte parallelen geraden Linie liegen, und
wobei der Druckmechanismus so ausgelegt ist, daß eine Rotation der exzentrischen Nocke (10) den Außenumfang der exzentrischen Nocke (10) in Kontakt mit der Oberfläche der eingeführten IC-Karte bringt und diesen eine Druckkraft auf letztere ausüben läßt, und daß eine darauf folgende Herausziehbewegung der eingeführten Karte eine weitere Rotation der exzentrischen Nocke (10) und eine erhöhte Druckkraft auf die Kartenoberfläche bewirkt.

2. Kombination einer IC-Karte und der Kartenbehandlungsvorrichtung nach Anspruch 1, wobei die exzentrische Nocke (10) und der IC-Kontaktpunktkopf (16) so ausgelegt sind, daß die Stelle, an der sich die exzentrische Nocke (10) in Kontakt mit der Kartenoberfläche der IC-Karte befindet, und eine Stelle, die ein IC-Kontaktpunkt auf der IC-Karte durchquert, nachdem die IC-Karte durch die Einführöffnung in einer autorisierten oder einer falschen Ausrichtung eingeführt worden ist, nicht auf einer zur Einführrichtung der IC-Karte parallelen geraden Linie liegen.

## Revendications

1. Dispositif de traitement de cartes (1), comportant :
un port d'insertion (3) pour insérer une carte IC (2) dans celui-ci, ladite carte IC (2) ayant un point de contact IC agencé à une position prédéterminée sur la surface de la carte,
une tête de point de contact IC (16) pour établir le contact avec ledit point de contact IC sur ladite carte IC (2) insérée depuis ledit port d'insertion, et lire des informations à partir de ladite carte IC (2) ou écrire des informations dans ladite carte IC (2), et
un mécanisme de presse pour presser ladite surface de carte de ladite carte IC afin d'empêcher ladite carte IC insérée (2) d'être extraite dudit port d'insertion (3) ,
**caractérisé en ce que** le mécanisme de presse comporte une came excentrique rotative (10) ayant une distance variant entre son axe de rotation (11) et sa circonférence extérieure (9a, 9b),
dans lequel la came excentrique (10) et la tête de point de contact IC (16) sont conçues de sorte que les positions auxquelles elles entrent en contact avec la surface de carte de la carte IC ne reposent pas sur une ligne droite parallèle à la direction d'insertion de ladite carte IC, et
dans lequel le mécanisme de presse est conçu de sorte qu'une rotation de la came excentrique (10) amène la circonférence extérieure de la came excentrique (10) à entrer en contact avec la surface de la carte IC insérée et à exercer une force de pression sur celle-ci, et de sorte qu'un mouvement d'extraction ultérieur de la carte insérée engendre une rotation supplémentaire de la came excentrique (10) et une force de pression accrue sur la surface de carte.

2. Combinaison d'une carte IC et du dispositif de traitement de carte de la revendication 1, dans laquelle la came excentrique (10) et la tête de point de contact IC (16) sont conçues de sorte que la position à laquelle la came excentrique (10) entre en contact avec la surface de carte de la carte IC, et une position à travers laquelle un point de contact IC sur ladite carte IC passe après que la carte IC ait été insérée à travers ledit port d'insertion dans une position autorisée ou erronée ne repose pas sur une ligne droite parallèle à la direction d'insertion de ladite carte IC.
